# EUROPEAN PATENT APPLICATION

(11) **EP 1 486 853 A2**
(43) Date of publication of application: **15.12.2004**
(21) Application number: 04013167.4
(22) Date of filing: 03.06.2004
(51) Int. Cl.: G06F 1/00

(54) **Methods and apparatuses for generating and restoring data**

(30) Priority: 04.06.2003 JP 2003158956
(71) Applicant: SONY CORPORATION, Tokyo (JP)
(72) Inventor: Haneda, Naoya, Shinagawa-ku Tokyo (JP); Tsutsui, Kyoya, Shinagawa-ku Tokyo (JP)
(74) Representative: Müller - Hoffmann & Partner

(57) **Abstract**

A data generation apparatus providing a high security level of trial data is disclosed. Normalization coefficient information not contained in a trial band is replaced with dummy data, and spectral coefficient information is extracted from a code frame. The location where the extracted spectral coefficient was written is filled with a spectral coefficient in a higher frequency range. Trial data to be distributed to users is thus generated. The true values of the normalization coefficient information and the spectral coefficient information are described in additional data. To restore original data from the trial data, the trial data and the additional data that is separately acquired are used. The present invention is applicable to an encoder, a replay apparatus, and a recording apparatus.

## Description

### BACKGROUND OF THE INVENTION

### 1. Field of the Invention

The present invention relates to a method and apparatus for generating data, a method and apparatus for restoring data, and a computer program and, in particular, to a method and apparatus, a method and apparatus for restoring data, and a computer program appropriate for delivering trial data of a content to users.

### 2. Description of the Related Art

Communication network techniques such as the Internet are in widespread use in step with advanced information compression and decompression technique, and availability of high-density information recording media. These advanced techniques allows, to be delivered to viewers through communication networks, digital contents containing a diversity of multi-media data such as audio, still images, moving images, and a combination of moving images and audio.

For example, stores that sell recording media such as package media, including compact disks (CDs) and Mini-Disk (MD®), having digital contents recorded thereon, may also sell directly digital contents by installing information terminals such as multi media kiosk (MMK) storing a great deal of digital contents including music data.

A user carries and inserts an MD into the MMK, selects a title of his or her desired digital content referencing a menu screen, and pays for the content. The user may pay in cash, digital money, or may electronically pay using a credit card or a prepaid card. The MMK records the data of the selected digital content in a predetermined process on the recording medium inserted by the user.

In addition to the selling of the digital contents to the users using the MMK, dealers may deliver the digital contents to the user through the internet.

The dealers thus effectively distribute the digital contents not only by selling the package media having the digital content recorded thereon but also by directly selling the digital contents.

In such a selling system, the digital contents must be distributed with copyright protected. Using techniques disclosed in Japanese Unexamined Patent Application Publication No. 2001-103047 and Japanese Unexamined Patent Application Publication No. 2001-325460, a digital content other than a trial portion thereof is encrypted before delivery. Only users who purchase a decryption key corresponding to encryption are permitted to listen to the entire content.

In a known encryption method, an initial value of a random number series is provided as a key signal to a bit string of audio digital pulse code modulation (PCM) data, and generated random numbers of 0 and 1 and the delivered PCM data are exclusively OR gated. The OR gated output is used as an encrypted bit string. The digital content thus encrypted is recorded on a recording medium in the MMK, or is delivered to users through a network. A user who has acquired an encrypted digital content can listen to only an unencrypted trial portion of the digital content without the key. Even if the user attempts to replay an encrypted portion of the digital content, he or she can hear noise only.

Advanced techniques are now used for broadcasting compressed audio data, for delivering compressed audio data through a network, and for recording compressed audio data onto a variety of recording media such as a magneto-optical disk.

Various methods are available for efficiently coding audio data. For example, a subband coding (SBC) splits an audio signal into a plurality of frequency bands before coding rather than dividing the audio signal in blocks along time axis. A block frequency-band division (namely, a so-called transform coding) spectrum transforms a signal in time domain into a signal in frequency domain, splits the signal into a plurality frequency subbands, and codes the signal segments on per subband basis. In another contemplated technique, frequency band is divided in a band division coding, a signal in time domain is then spectrum transformed into a signal in frequency domain, and coding is performed on each of the spectrum converted bands.

A filter used here is a quadrature mirror filter (QMF). The QMF is discussed in detail in a paper entitled "Digital Coding of Speech in Subbands" Bell Syst. Tech. J. Vol. 55, No. 8, 1974 authored by R.E. Crochiere. Filter division technique having equal band width is discussed in a paper entitled "Polyphase Quadrature Filters - A new subband coding technique" ICASSP 83, Boston authored by Joseph H. Rothweiler.

The spectrum transforms include discrete Fourier transform (DFT), discrete cosine transform (DCT), modified discrete cosine transform (MDCT). Each spectrum transform is performed for each block, into which an input audio signal is segmented. MDCT is discussed in detail in a paper entitled "Subband/ Transform Coding Using Filter Bank Designs based on Time Domain Aliasing Cancellation" ICASSP 1987 coauthored by J.P. Princen and A.B. Bradley (University of Surrey Royal Melbourne Institute of Tech.).

If DFT or DCT is used to spectrum transform a wave signal, a transformation of a time block of M samples results in independent M pieces of real data. To reduce link distortion between the time blocks, N/2 samples from each of two adjacent blocks, namely, a total of N samples from the two adjacent blocks overlap each other. In DFT and DCT, independent M pieces of real data are quantized and coded on average in response to (M+N) samples.

In contrast, if MDCT is performed for spectrum transformation on a time block having M samples, M/2 samples from each of two adjacent blocks overlap each other. Independent M pieces of real data are obtained from 2M samples with a total of M samples overlapping on both blocks. In MDCT, M pieces of real data are quantized and coded on average in response to M samples.

A decoding apparatus inverse transforms each block that is a MDCT code, and sums resulting wave elements while causing wave elements to mutually interfere with. A wave signal is thus reconstructed.

Generally speaking, the longer the time block for transformation, the higher the frequency spectrum resolution, and energy concentrates more in a particular spectral component. A signal is converted on a long block length with adjacent blocks mutually overlapping by half length thereof, using the MDCT. In MDCT, the number of resulting spectral signals is not increased from the number of samples in time domain. MDCT performs coding more efficiently than DFT or DCT. With the adjacent blocks overlapping each other by a sufficiently long length thereof, an inter-block distortion of the wave signal is reduced.

Band-divided signals are quantized through a filtering operation and a spectrum transform, and a band causing quantization noise is controlled. The use of masking effect permits more efficient coding in auditory sense. If a maximum absolute value of a signal component in each band is normalized prior to quantization, an even more efficient coding is carried out.

When a frequency-band divided component is quantized, the auditory sense of humans may be taken into consideration in the determination of a frequency-band width. The audio signal may be divided into a plurality of bands (25 bands, for example) so that the band width becomes broader in a high frequency region typically referred to as a critical band.

When the band division is performed to achieve the broader critical band, the data is coded on a per band basis. A predetermined number of bits may be allocated to each band, or bits may be adaptively allocated to each band (in bit allocation).

When coefficient data obtained from MDCT is coded in the bit allocation, bit numbers are adaptively allocated to the MDCT coefficient data per band obtained using the MDCT, and coding is performed. Two techniques for bit allocation are known as disclosed in an IEEE Transaction of Acoustics, Speech, and Signal Processing, Vol. ASSP-25, No. 4, August 1977 entitled "Adaptive Transform Coding of Speech Signals" coauthored by R. Zelinski and P. Noll, and a paper entitled "The critical band coder digital coding of the perceptual requirements of the auditory system" ICASSP, 1980, authored by M.A. Kransner, Massachusetts Institute of Technology.

In the technique disclosed by R. Zelinski and P. Noll, bit allocation is performed based on the magnitude of a signal on a band by band basis. In this technique, the quantization noise spectrum becomes flat, and noise energy is minimized. Since the masking effect is not used in the auditory sense, this technique is not preferable from the standpoint of reducing noise actually heard by the ear of the human.

In the technique disclosed by M.A. Kransner, signal to noise ratio required in each band is achieved by using the auditory masking effect, and a fixed bit is allocated to each band. However, since the bit allocation is fixed when characteristics are measured using a sine wave input, characteristic values are not so good as expected.

To overcome these drawbacks, one high efficiency coding technique has been proposed. In this technique, all bits available for the bit allocation are divided into those for fixed bit allocation pattern predetermined for each small block, and those for bit allocation depending on the magnitude of a signal in each block. The ratio of division depends on a signal related to an input signal. The smoother the spectrum of the signal, the larger the division ratio for the fixed bit allocation pattern becomes.

This technique substantially improves the overall signal to noise ratio because a more bit number is allocated to a block containing a particular spectrum, such as a sine wave signal, on which energy concentrates. Since the auditory sense of the human is extremely sensitive to a signal having a sharp spectral component, the improvement in the signal to noise characteristic achieved by this technique is effective for improving not only characteristic values in measurement but also quality of sound actually heard by the human.

Many more bit allocation techniques have been proposed. As a model of auditory sense becomes sophisticated, and coding apparatuses have improved ability, not only the characteristic values in measurement are improved but also higher efficiency coding felt by the human auditory sense is performed. In a typical method of these techniques, a real number of bit allocation criterion that faithfully achieves a calculated signal to noise ratio, and an integer value approximating the bit allocation criterion is determined, and then set as an allocated bit number.

Japanese Unexamined Patent Application Publication No. 5-152865 and International Publication 94/28633, both assigned to the same assignee of this patent application, disclose a technique. The disclosed technique separates, from a generated spectral signal, a particularly important tone component in the auditory sense, namely, a component in which energy concentrates on or in the vicinity of a particular frequency, and codes the tone component separately from remaining spectral components. The technique effectively codes an audio signal at a high compression rate without resulting in a degradation in the auditory sense.

When an actual code string is generated, quantization precision information and normalization coefficient information are coded using a predetermined bit number in each band where normalization and quantization are performed. A spectral signal, that is normalized and quantized, is then coded. ISO/IEC standard 11172-3 (1993(E),a933) describes a high-efficiency coding technique in which a bit number representing quantization precision information, different on a per band basis, is set. According to the standard, the bit number representing the quantization precision information is set to be smaller with the band becoming higher in frequency.

In one known technique, a decoding apparatus determines the quantization precision information from the normalization coefficient information instead of directly coding the quantization precision information. However, in accordance with this technique, the relationship between the normalization coefficient information and the quantization precision information is fixed at the time of standardizing a criterion. This technique does not permit a future introduction of control using quantization precision when a more sophisticated auditory sense model becomes available. If a compression rate has a range, the relationship between the normalization coefficient information and the quantization precision information must be determined in every compression rate.

A technique for efficiently coding a quantized spectral signal is disclosed in a paper "A Method for Construction of Minimum Redundancy Codes" Proc. I.R.E. 40, p. 1098, 1952 authored by D.A. Huffman. In this technique, a coding operation is efficiently performed using variable-length codes.

The content data coded using one of the above-described techniques is encrypted in the same manner as a PCM signal, and is distributed. If the content protection method is implemented, a user who has no key signal cannot replay an original signal. In another technique, a PCM signal is converted into a random signal, and is then coded for compression instead of encrypting a code bit string. If the content protection method is implemented, a user who has no key signal replays only noise.

By distributing trial data of content data, sale of the content data is promoted. The trial data may include data that is replayed at a sound quality lower than the original data, or data that is the most characteristic portion of the original data, etc. The user listens to the trial data. If the user likes the trial data, he or she purchases a key for decryption to replay the original content data, or newly purchases a recording medium having the original data recorded thereon.

With above-described content protection method, the user cannot replay the entire data, or can replay the entire data in the form of noise. Even if the data scrambled in the above-described method is distributed to the user as the trial data, the user is unable to learn the entire original content data. A recording medium having audio recorded thereon at a relatively low sound quality cannot be distributed as the trial data.

With the known techniques, widely available replay apparatuses have extreme difficulty providing meaningful code string while maintaining the compression rate when a high-efficiency coded signal is encrypted. More specifically, a code string generated through high-efficiency coding is scrambled, and if the code string is replayed without being descrambled, not only noise is generated, but also a replay operation is not performed at all if the code string generated through the scramble process fails to comply with the original high-efficiency coding standard.

Conversely, a high-efficiency coding process may be performed subsequent to the scrambling of the PCM signal. If an amount of information is cut off taking advantage of the characteristic of auditory sense, this process cannot be undone. When such a high-efficiency coded signal is decoded, a signal that is obtained by scrambling the PCM signal cannot be correctly replayed. Descrambling such a signal is extremely difficult.

In the distribution of the trial data, a technique that permits the PCM signal to be correctly descrambled has been used even if the compression rate drops.

Japanese Unexamined Patent Application Publication No. 10-135944, assigned to the same assignee of this patent application, discloses an audio coding technique. In the disclosed audio coding technique, music data is converted into a spectral signal, which is then decoded. Data in which only a high frequency band code is encrypted is distributed as trial data. Even the user having no key decodes and replays a narrow-band signal not encrypted. In this technique, the code in the high frequency band is encrypted, and bit allocation information in the high frequency band is replaced with dummy data. True bit allocation information in the high frequency band is recorded at a location a decoder performing a replay process skips (neglects) in reading information during a replay process.

Upon receiving the trial data, the user replays the trial data with this technique, and purchases a key for decoding any trial data the user likes into original data thereof, and correctly replays and enjoys desired music of all bands at a high sound quality.

In one delivery service, trial data is delivered to users, and a key for reproducing original data from the trial data is sold to a user who likes to purchase the original data. It is important to make it as difficult as possible for a third party to estimate the original data from the trial data in an unauthorized fashion. Such an objective is not sufficiently achieved depending on the protection method of the contents.

If the trial data is illegally read, and the original data is restored from the trial data with the key unpurchased, the seller or the content provider is unable to collect a fee for the content. Such a case must be obviated.

### SUMMARY OF THE INVENTION

Accordingly, it is an object of the present invention to make it difficult for a third party for estimating high-quality original data from trial data to enhance the security level of the trial data.

The present invention in a first aspect relates to a data generation method for generating a predetermined data string from a first data string, and includes a first generating step for generating a second data string by extracting first data contained in the first data string and by arranging second data, contained in the first data string, at a location from which the first data is extracted, and a second generating step for generating a third data string that contains the extracted first data and is used to restore the first data string from the second data string generated in the first generating step.

The above arrangement increases the difficulty in the replaying of original data (the first data string) by extracting a portion of data (the first data) from the original data. Furthermore, the description of other data (the second data) on the location of the original data string from which the first data is extracted makes it difficult to identify the location of the extraction. The other data may be described by moving, shifting and copying data adjacent to the location of the extraction, by moving, shifting and copying data from a different location within the same unit to the location of the extraction, or by moving, shifting and copying data from a completely different location to the location of the extraction.

The type of data to be extracted and the data format of the original data string are preferably set so that the remaining data lacking the extracted portion thereof is also replayed in the same replay method of the original data string. For example, the data to be extracted may contain an identifier of the data format (such as information defined in the form of prefix or suffix) for identifying the data in whole or in part, or may contain data the meaning of which is interpreted by the location thereof within the data string.

Preferably, at least one of a recording position of the extracted first data within the first data string and a data length of the extracted first data changes randomly.

Preferably, the third data string contains at least one of information representing a recording position of the extracted first data within the first data string and information representing a data length of the extracted first data.

Preferably, the first data is extracted in the first generating step in a manner such that an output that is obtained by replaying the second data string is inferior in quality to an output that is obtained by replaying the first data string. Here, the quality refers to the quality of replay or the quality of interpretation. With the quality set to be poor, neither replaying nor interpretation of the original data is possible. Alternatively, with the quality set to be poor, the replaying and interpretation of the original data are still possible, but the amount of information replayable and interpretable from the second data string is smaller than the amount of information that results from replaying and interpreting the first data string.

The data generation method may further include a coding step for coding input data. In the first generating step, the first data is extracted from the first data string that is the data coded in the coding step, and the second data string is generated by arranging the second data, contained in the first data string, at the location of the first data string from which the first data is extracted.

Preferably, each of the first data and the second data contains at least one of normalization coefficient information and quantization precision information of a coding process in the coding step.

A data generation method may further include a component transforming step for transforming input data into a frequency component, and a coding step for coding the data that is the frequency component obtained in the component transforming step. In the first generating step, the first data is extracted from the first data string that is the data coded in the coding step, and the second data string is generated by arranging the second data, contained in the first string, at the location of the first data string from which the first data is extracted. Each of the first data extracted in the first generating step and the second data arranged at the location from which the first data is extracted contains spectral coefficient information of the frequency component that is obtained in the component transforming step.

Preferably, each of the first data and the second data contains variable-length coded data.

Preferably, the second generating step further includes encrypting the third data string.

The present invention in a second aspect relates to a data generation apparatus for generating a predetermined data string from a first data string, includes a first generating unit for generating a second data string by extracting first data contained in the first data string and by arranging second data, contained in the first data string, at a location from which the first data is extracted, and a second generating unit for generating a third data string that contains the extracted first data and is used to restore the first data string from the second data string generated in the first generating unit.

The present invention in a third aspect relates to a first computer program for causing a computer to perform a process for generating a predetermined data string from a first data string. The computer program includes program codes for performing a first generating step for generating a second data string by extracting first data contained in the first data string and by arranging second data, contained in the first data string, at a location from which the first data is extracted, and a second generating step for generating a third data string that contains the extracted first data and is used to restore the first data string from the second data string generated in the first generating step.

The present invention in a fourth aspect relates to a data restoring method for restoring a first data string from a predetermined data string, and includes an acquiring step for acquiring a third data string that contains information used to restore the first data string from a second data string, and a restoring step for restoring the first data string by inserting first data, which is contained in the third data string acquired in the acquiring step and is extracted from the first data string when second data is generated, into a location within the second data string corresponding to the location from which the first data is extracted, and by modifying a location of the second data contained in the second data string.

Preferably, the data restoring method further includes a replaying step for replaying the first data string restored in the restoring step.

Preferably, the data restoring method further includes a recording step for recording the first data string restored in the restoring step onto a predetermined recording medium.

The present invention in a fifth aspect relates to a data restoring apparatus for restoring a first data string from a predetermined data string, and includes an acquiring unit for acquiring a third data string that contains information used to restore the first data string from a second data string, and a restoring unit for restoring the first data string by inserting first data, which is contained in the third data string acquired by the acquiring means and is extracted from the first data string when second data is generated, into a location within the second data string corresponding to the location from which the first data is extracted, and by modifying a location of the second data contained in the second data string.

The present invention in a sixth aspect relates to a second computer program for causing a computer to perform a data restoring method for restoring a first data string from a predetermined data string, and includes an acquiring step for acquiring a third data string that contains information used to restore the first data string from a second data string, and a restoring step for restoring the first data string by inserting first data, which is contained in the third data string acquired in the acquiring step and is extracted from the first data string when second data is generated, into a location within the second data string corresponding to the location from which the first data is extracted, and by modifying a location of the second data contained in the second data string.

The data generation method, the data generation apparatus, and the first computer program in accordance with the preferred embodiments of the present invention generate the second data string by extracting the first data from the first data string, and describing the second data, contained in the first data string, at the location of the extraction. The third data string containing the extracted first data is generated to restore the first data string from the second data string.

The data restoring method, the data restoring apparatus, and the second computer program in accordance with the preferred embodiments of the present invention acquire the third data string that contains the information used to restore the first data string from the second data string, and restores the first data string by inserting the first data, which is contained in the third data string acquired in the acquiring step and is extracted from the first data string when the second data is generated, into the location within the second data string corresponding to the location from which the first data is extracted, and by modifying the location of the second data contained in the second data string.

In accordance with the present invention, the data string is converted.

In accordance with the present invention, the data that is difficult to estimate in the original data thereof is provided to the user.

In accordance with the present invention, the data string is restored.

In accordance with the present invention, the data string of the original data is restored from the provided data by acquiring a data string for restoring the original data string.

### BRIEF DESCRIPTION OF THE DRAWINGS

Fig. 1 is a block diagram illustrating the structure of a data delivery system in accordance with preferred embodiments of the present invention;
Fig. 2 is a block diagram illustrating the structure of an encoder of Fig. 1;
Fig. 3 is a block diagram illustrating the structure of a converter of Fig. 2;
Fig. 4 illustrates a spectral signal and a quantization unit;
Fig. 5 is a block diagram illustrating the structure of a signal component encoder of Fig. 2;
Fig. 6 illustrates a tone component and a non-tone component;
Fig. 7 is a block diagram illustrating the structure of a tone component encoder of Fig. 5;
Fig. 8 is a block diagram illustrating the structure of a non-tone component encoder of Fig. 5;
Fig. 9 illustrates a format of a frame of original data;
Fig. 10 is a block diagram illustrating the structure of a data separator of Fig. 2;
Fig. 11 illustrates a format of a trial frame;
Fig. 12 illustrates a spectral signal corresponding to the trial frame of Fig. 11;
Fig. 13 illustrates a format of an additional frame;
Fig. 14 is a flowchart illustrating a trial data generation process;
Fig. 15 is a block diagram illustrating the structure of a data replay apparatus of Fig. 1;
Fig. 16 is a block diagram illustrating the structure of a signal component decoder;
Fig. 17 is a block diagram illustrating the structure of a tone component decoder of Fig. 16;
Fig. 18 is a block diagram illustrating the structure of a non-tone component decoder of Fig. 16;
Fig. 19 is a block diagram illustrating the structure of an inverse converter of Fig. 15;
Fig. 20 is a flowchart illustrating a data replay process;
Fig. 21 is a flowchart illustrating a code string restoration process;
Fig. 22 is a block diagram illustrating the structure of a data recording apparatus;
Fig. 23 is a flowchart illustrating a data recording process; and
Fig. 24 is a block diagram illustrating the structure of a personal computer.

### DESCRIPTION OF THE PREFERRED EMBODIMENTS

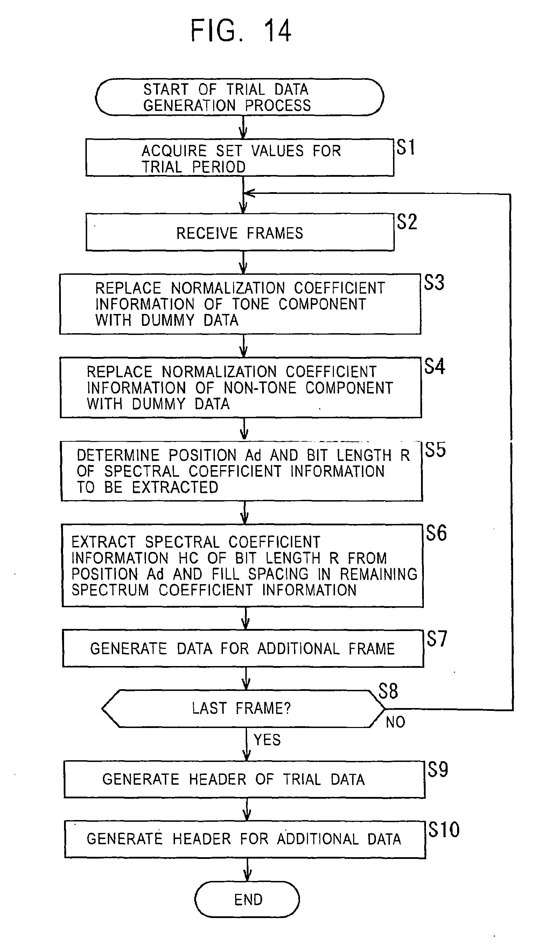

A data generation method of preferred embodiments of the present invention for generating a predetermined data string (such as trial data and additional data) from a first data string (such as original data), and includes a first generating step (steps S2 through S6 of Fig. 14, for example) for generating a second data string (for example, the trial data) by extracting first data (for example, a spectral coefficient) contained in the first data string and by arranging second data (for example, a spectral coefficient on a higher frequency side adjacent to the extracted spectral coefficient), contained in the first data string, at a location from which the first data is extracted, and a second generating step (for example, step S7 of Fig. 14) for generating a third data string (for example, the additional data) that contains the extracted first data and is used to restore the first data string from the second data string generated in the first generating step.

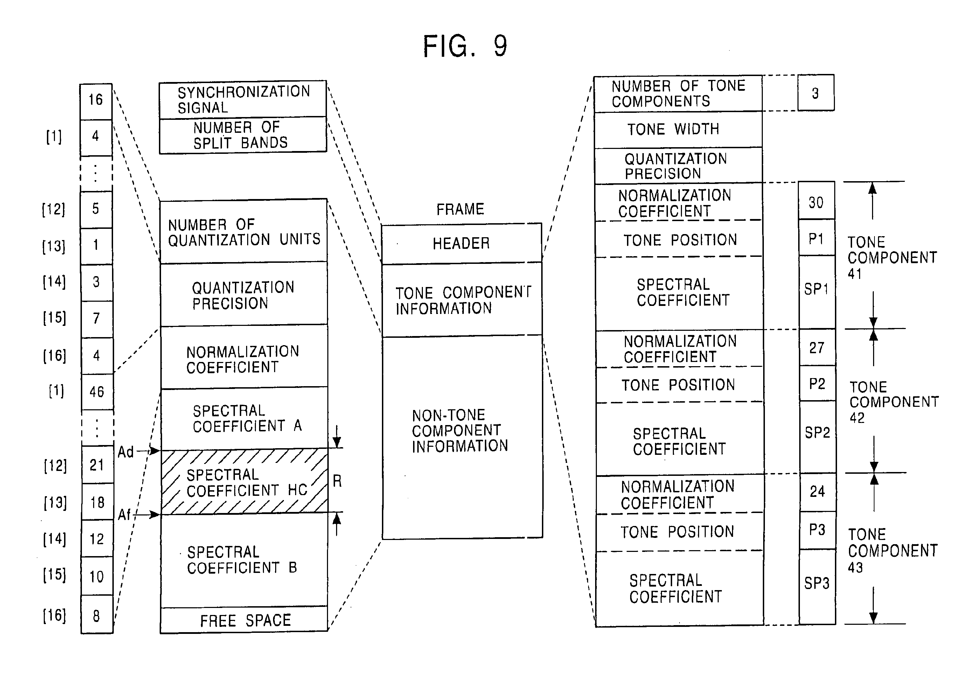

At least one of a recording position (for example, a position Ad of Fig. 9) of the extracted first data within the first data string and a data length (for example, a length R of Fig. 9) of the extracted first data changes randomly.

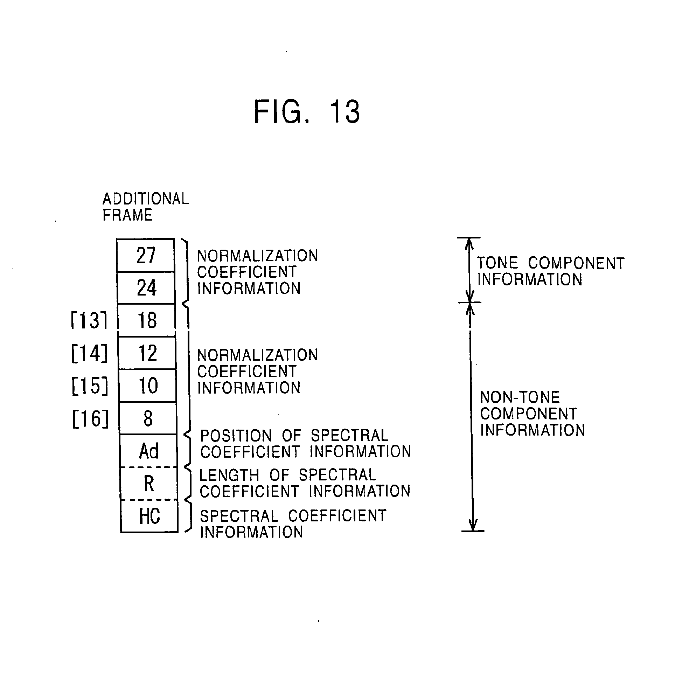

The third data string contains at least one of information representing a recording position (for example, the position Ad of Fig. 13) of the extracted first data within the first data string and information representing a data length (for example, the length R of Fig. 13) of the extracted first data.

The first data is extracted in the first generating step in a manner such that an output that is obtained by replaying the second data string is inferior in quality to an output that is obtained by replaying the first data string (so that spectral coefficient information in quantization units [13] through [16] is minimized).

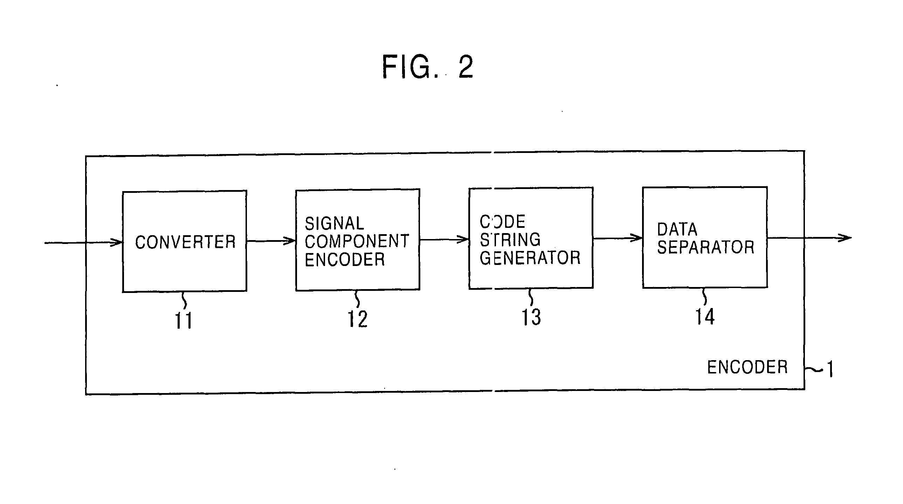

The data generation method may further include a coding step for coding input data (for example, the coding step is a process carried out by a code string generator 13 of Fig. 2). In the first generating step, the first data is extracted from the first data string that is the data coded in the coding step, and the second data string is generated by arranging the second data, contained in the first data string, at the location of the first data string from which the first data is extracted.

Each of the first data and the second data contains at least one of normalization coefficient information and quantization precision information of a coding process in the coding step.

The data generation method may further include a component transforming step for transforming input data into a frequency component (for example, the transforming step is a process performed by a converter 11 of Fig. 2), and a coding step (for example, the coding step is a process. performed by the code string generator 13 of Fig. 2) for coding the data that is the frequency component obtained in the component transforming step. In the first generating step, the first data is extracted from the first data string that is the data coded in the coding step, and the second data string is generated by arranging the second data, contained in the first string, at the location of the first data string from which the first data is extracted. Each of the first data extracted in the first generating step and the second data arranged at the location from which the first data is extracted contains spectral coefficient information of the frequency component that is obtained in the component transforming step.

Each of the first data and the second data contains variable-length coded data (including the normalization coefficient information, the quantization precision information, and spectral coefficient information.

The second generating step further includes encrypting the third data string.

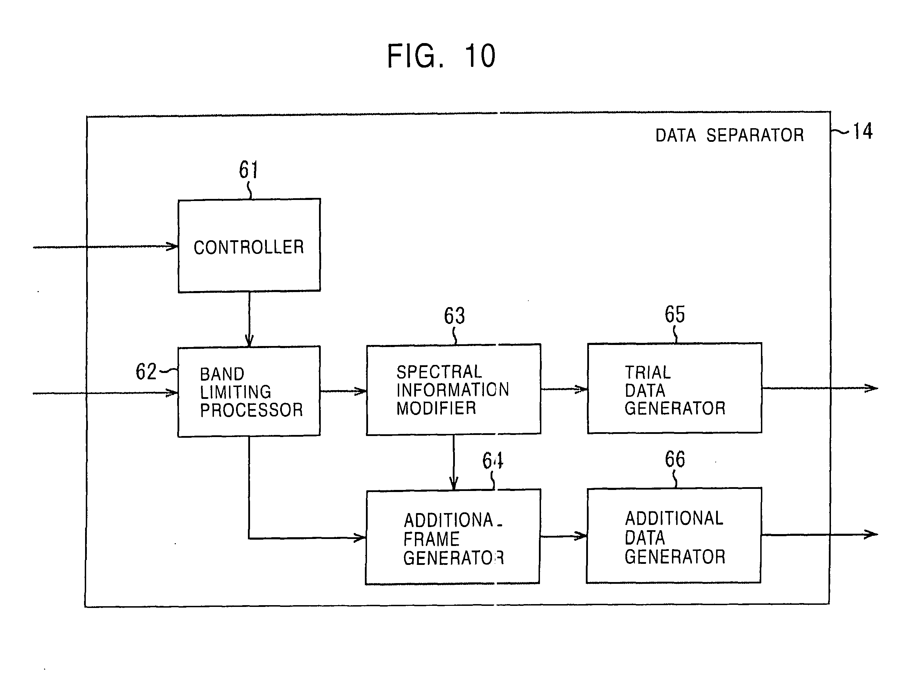

A data generation apparatus of preferred embodiments of the present invention for generating a predetermined data string (for example, the trial data and the additional data) from a first data string (for example, the original data), includes a first generating unit (for example, a trial data generator 65 of Fig. 10) for generating a second data string (for example, the trial data) by extracting first data (for example, some of spectral coefficients) contained in the first data string and by arranging second data (for example, the spectral coefficient on a higher frequency side adjacent to the extracted spectral coefficient), contained in the first data string, at a location from which the first data is extracted, and a second generating unit (an additional data generator 66 of Fig. 10) for generating a third data string (for example, the additional data) that contains the extracted first data and is used to restore the first data string from the second data string generated in the first generating unit.

A computer program of preferred embodiments of the present invention causes a computer to perform a process for generating a predetermined data string (for example, the trial data and the additional data) from a first data string (for example, the original data). The computer program includes program codes for performing a first generating step (for example, steps S2 through S6 of Fig. 14) for generating a second data string (for example, the trial data) by extracting first data (for example, a spectral coefficient) contained in the first data string and by arranging second data (for example, a spectral coefficient on a higher frequency side adjacent to the extracted spectral coefficient), contained in the first data string, at a location from which the first data is extracted, and a second generating step (for example, step S7 of Fig. 14) for generating a third data string (for example, the additional data) that contains the extracted first data and is used to restore the first data string from the second data string generated in the first generating step.

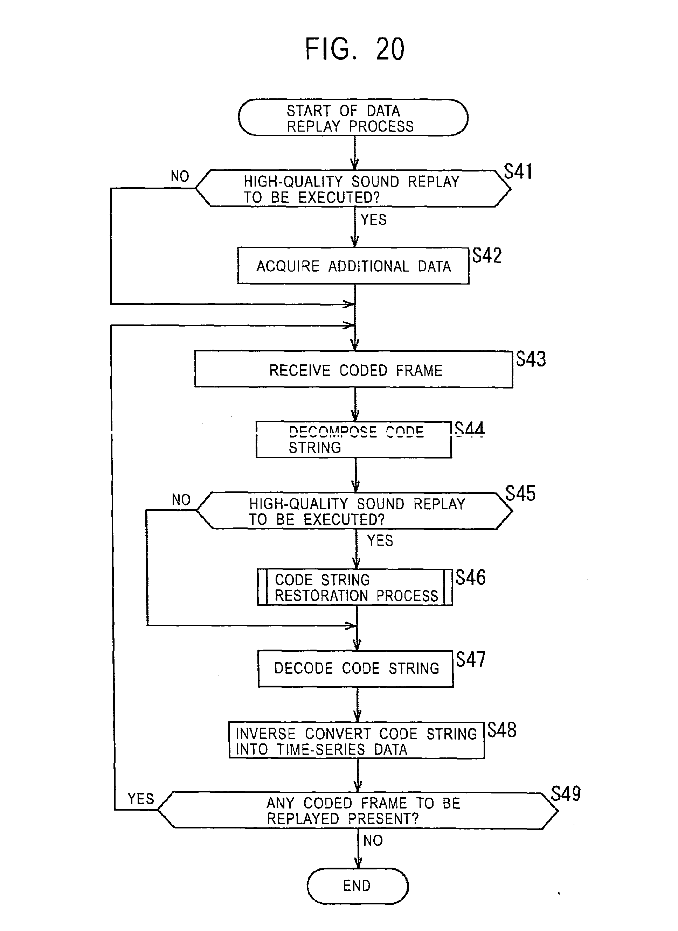

A data restoring method of preferred embodiments of the present invention for restoring a first data string (for example, the original data) from a predetermined data string (for example, the trial data and the additional data), includes an acquiring step (for example, step S42 of Fig. 20) for acquiring a third data string (for example, the additional data) that contains information used to restore the first data string from a second data string (for example, the trial data), and a restoring step (for example, step S46 of Fig. 20) for restoring the first data string by inserting first data (for example, a spectral coefficient), which is contained in the third data string acquired in the acquiring step and is extracted from the first data string when second data is generated, into a location within the second data string corresponding to the location from which the first data is extracted, and by modifying a location of the second data (a spectral coefficient on a higher frequency side adjacent to the extracted spectral coefficient) contained in the second data string.

The data restoring method further includes a replaying step (for example, step S48 of Fig. 20) for replaying the first data string restored in the restoring step.

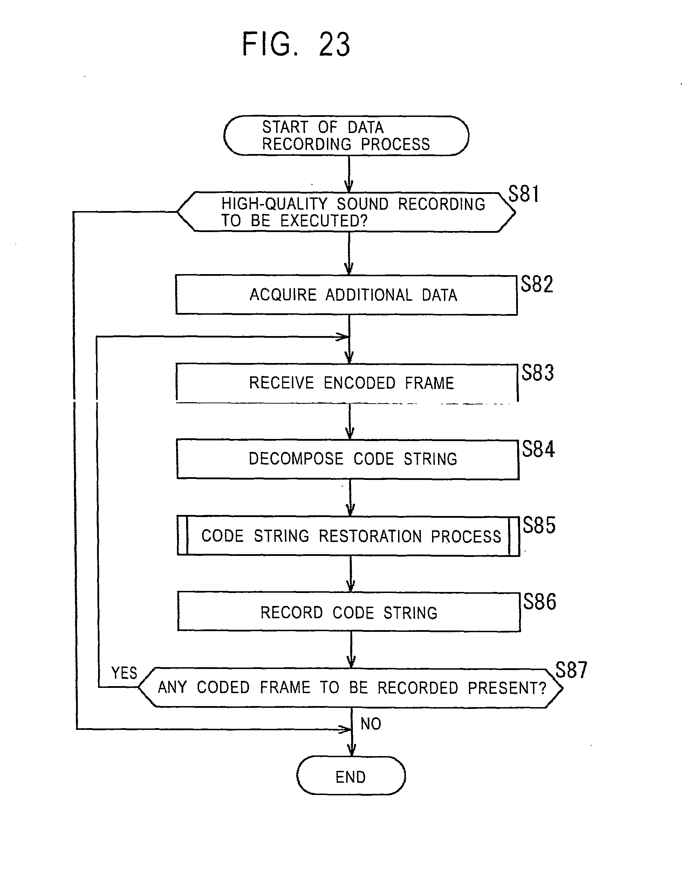

The data restoring method further includes a recording step (for example, step S86 of Fig. 23) for recording the first data string restored in the restoring step onto a predetermined recording medium.

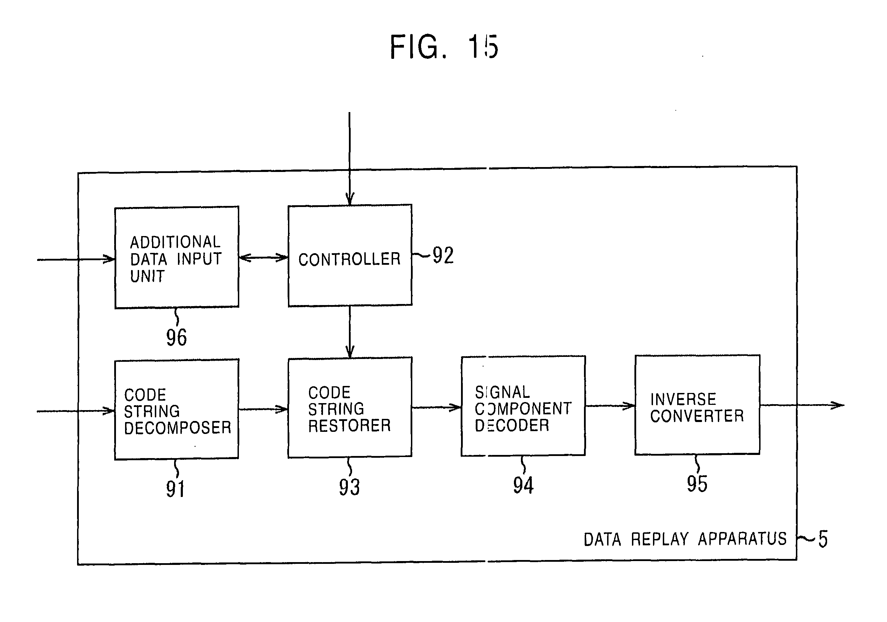

A data restoring apparatus of preferred embodiments of the present invention for restoring a first data string (for example, the original data) from a predetermined data string (for example, the trial data and the additional data), includes an acquiring unit (for example, an additional data input unit 96 of Fig. 15) for acquiring a third data string (for example, the additional data) that contains information used to restore the first data string from a second data string (for example, the trial data), and a restoring unit (for example, a code string restoring unit 93 of Fig. 15) for restoring the first data string by inserting first data (for example, a spectral coefficient), which is contained in the third data string acquired by the acquiring means and is extracted from the first data string when second data is generated, into a location within the second data string corresponding to the location from which the first data is extracted, and by modifying a location of the second data (for example, a spectral coefficient on a higher frequency side adjacent to the extracted spectral coefficient) contained in the second data string.

A computer program of the preferred embodiments of the present invention for causing a computer to perform a data restoring method for restoring a first data (for example, the original data) string from a predetermined data string (for example, the trial data and the additional data), includes an acquiring step (for example, step S42 of Fig. 20) for acquiring a third data string (for example, the additional data) that contains information used to restore the first data string from a second data string (for example, the trial data), and a restoring step (for example, step S46 of Fig. 20) for restoring the first data string by inserting first data (for example, a spectral coefficient), which is contained in the third data string acquired in the acquiring step and is extracted from the first data string when second data is generated, into a location within the second data string (a spectral coefficient on a higher frequency side adjacent to the extracted spectral coefficient) corresponding to the location from which the first data is extracted, and by modifying a location of the second data contained in the second data string.

The preferred embodiments of the present invention will now be discussed with reference to the drawings.

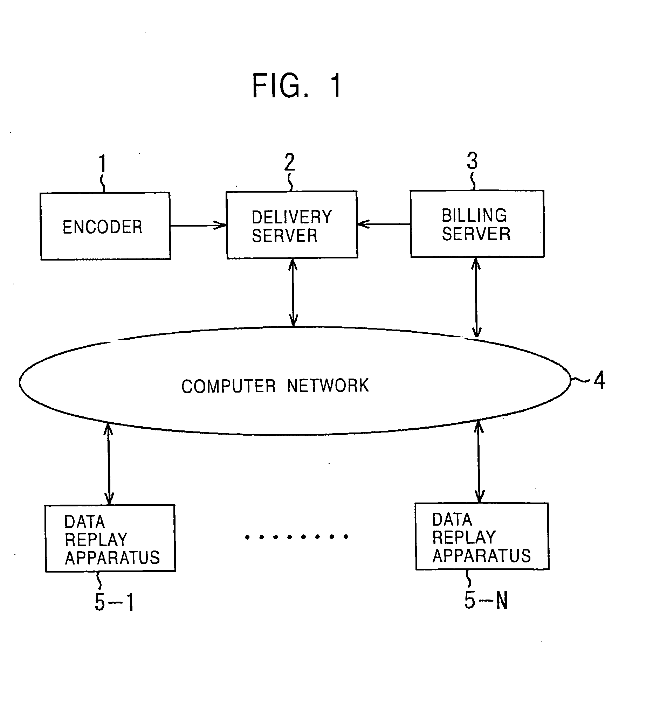

Fig. 1 is a block diagram illustrating the structure of a data delivery system in accordance with one preferred embodiment of the present invention.

An encoder 1 generates low-quality trial data (audition data) from original data of music contents while generating additional data that is required to restore the original data from the trial data. After encrypting the additional data as necessary, the encoder 1 supplies the delivery server 2 with the trial data and the additional data.

The delivery server 2 delivers the trial data supplied from the encoder 1 to a predetermined one of data replay apparatuses 5 (5-1 through 5-6) through a wired or wireless computer network 4, free of charge or for a fee. In the system of Fig. 1, N data replay apparatuses 5 are connected to the computer network 4.

A user of the data replay apparatus 5 replays and listens to the trial data by operating the data replay apparatus 5. If the user likes the content and wants to purchase it, he or she acquires (downloads) the additional data used to restore the original data from the trial data, separately from the trial data from the delivery server 2, decrypts the additional data decrypted as necessary, and then restore the original data using the additional data.

The additional data is typically pay data. To acquire the additional data to restore the original data from the trial data, the user must complete first a payment procedure for the fee for the additional data accessing a billing server 3. Upon receiving, from the billing server 3, a notification that the user has completed the payment procedure, the delivery server 2 delivers the additional data requested by the user of the data replay apparatus 5.

The user of the data replay apparatus 5 can thus check the original data in whole from the trial data although the data is still at a low quality. Since the additional data must be purchased to restore the original data from the trial data, the seller of the music content reliably prevents the original data from being illegally restored from the trial data.

Fig. 2 is a block diagram illustrating the structure of an encoder 1 of Fig. 1. The encoder 1 generates the trial data and the additional data in response to the input of an audio waveform signal.

In response to the input of a digital signal such as an audio PCM signal, the encoder 1 carries out high-efficiency coding by performing subband coding (SBC), adaptive transform coding (ATC), and adaptive bit allocation. ATC adapts bit allocation based on the discrete cosine transform (DCT), and transforms an input signal into a spectral signal on a per time block basis, normalizes the spectral signal on a per predetermined band basis, in other words, divides each signal component by a normalization coefficient approximating a maximum signal component, quantizes the normalized signal by a quantization precision that is appropriately determined depending on the feature of the signal, and codes the quantized signal.

The converter 11 transforms the input audio waveform signal into a signal frequency component, and outputs the signal frequency component to a signal component encoder 12. The signal component encoder 12 codes the input signal frequency component, and outputs the coded signal to a code string generator 13. The code string generator 13 generates a code string from the coded signal frequency component, and outputs the generated code string to a data separator 14. The data separator 14 performs a predetermined process to the code string input from the code string generator 13, such as rewriting of normalization coefficient information, thereby converting the original data replayable at a high quality level into the trial data replayable at a low quality level. The data separator 14 also generates the additional data (restoring data) corresponding to the trial data that is sold to a user who desires to replay the original data or who desire to record the original data onto a predetermined recording medium. The generated trial data and additional data are output to the delivery server 2.

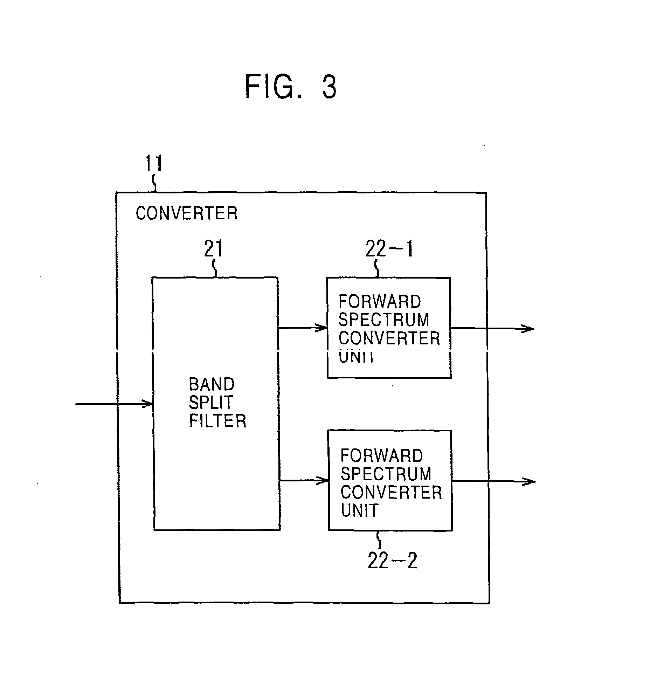

Fig. 3 is block diagram illustrating the structure of a converter 11 of Fig. 2.

The audio waveform signal input to the converter 11 is divided into two bands by a band split filter 21. Split band signals are then input to a forward spectral converter unit 22-1 and a forward spectral converter unit 22-2. The forward spectral converter units 22-1 and 22-2 transform the respectively received signals into spectral component signals using MDCT for example, and outputs the spectral component signals to the signal component encoder 12. The signals respectively input to the forward spectral converter units 22-1 and 22-2 have half the band width of the signal input to the band split filter 21, and are thinned in amount by half in comparison with the signal input to the band split filter 21.

In the converter 11 of Fig. 3, the signals split into the two bands by the band split filter 21 are transformed into the spectral component signals using MDCT. Any other method may be used to transform the input signal into the spectral component signal. For example, without being split in band, the input signal may be transformed into the spectral signal component using MDCT. Alternatively, the input signal may be converted into the spectral signal using DCT or DFT.

It is possible to split the input signal into band components using a band split filter. However, spectral transformation is preferably performed using MDCT, DCT, or DFT because MDCT, DCT, or DFT may calculate a number of frequency components with a relatively small amount of computation involved.

Referring to Fig. 3, the input audio waveform signal is split into the two bands by the band split filter 21. The number of split bands is not limited to two. Information indicating the number of split bands of the signal component encoder 12 is output to the code string generator 13 through the signal component encoder 12.

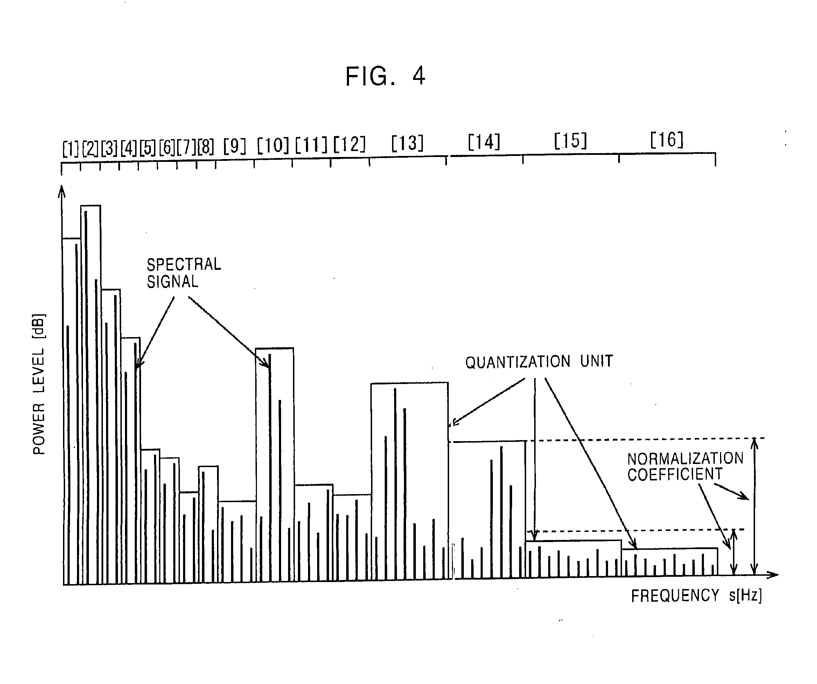

Fig. 4 illustrates a power level to which the absolute value of the MDCT spectral signal provided by the converter 11 is converted.

The audio waveform signal input to the converter 11 is transformed every a predetermined time block into 64 spectral signals, for example. The signal component encoder 12 divides these spectral signals into 16 subbands, [1] through [16] as enclosed by solid line in a process to be discussed later. Quantization and normalization are performed on a per subband basis. A group of spectral signals in each of the 16 subbands, namely, a group of spectral signals quantized and normalized is referred to as a quantization unit.

Efficient coding minimizing degradation in the quality of sound heard by humans is possible by varying the quantization precision from quantization unit to quantization unit based on the distribution of the frequency component.

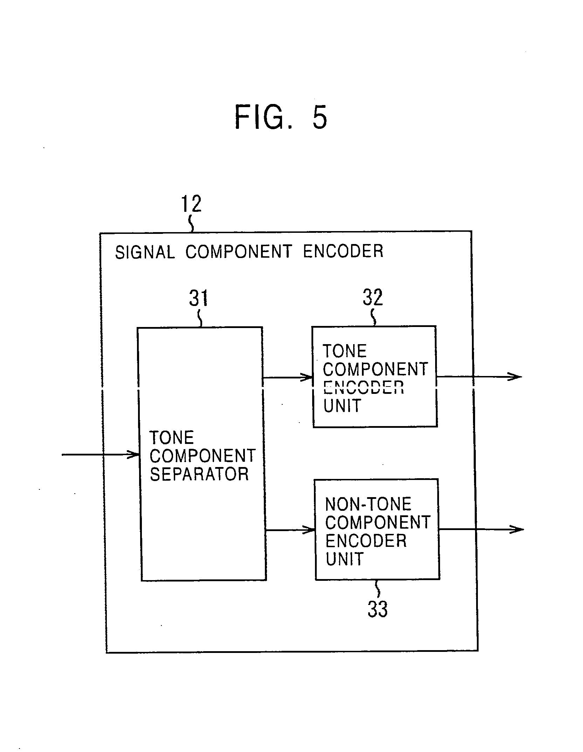

Fig. 5 is a block diagram illustrating in more detail the structure of the signal component encoder 12 of Fig. 2.

The signal component encoder 12 separates, from the input spectral signal, a tone portion particularly important in the auditory sense, namely, a signal component in which energy concentrates on or in the vicinity of a particular frequency, and codes the signal component separately from the remaining spectral component.

A tone component separator 31 separates the spectral signal input through the converter 11 into a tone component and a non-tone component. The tone component is fed to a tone component encoder unit 32 while the non-tone component is fed to a non-tone component encoder unit 33.

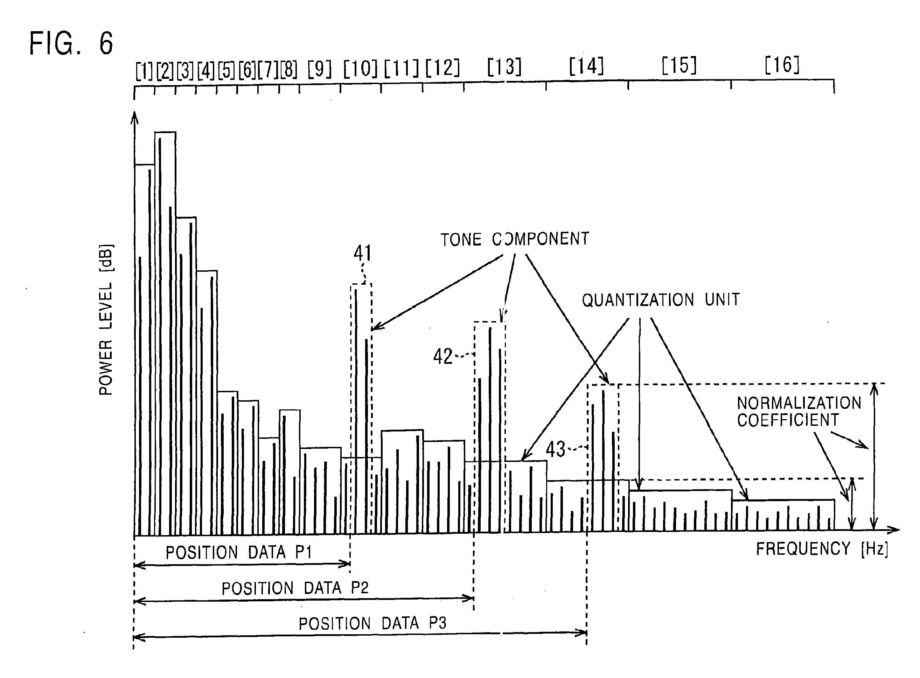

The tone component and the non-tone component are discussed with reference to Fig. 6.

If the spectral signal input to the tone component separator 31 is a signal as shown in Fig. 4 (Fig. 6), a portion that is particularly high in power level is separated from the non-tone component as tone components 41-43. Detected then are position data P1 through P3 respectively indicating the positions of the tone components 41 through 43, and frequency widths extracted as the tone components. These pieces of information are output to the tone component encoder unit 32 together with the tone components.

The method of separating the tone component may be the ones disclosed in Japanese Unexamined Patent Application No. 5-152865 and International Publication No. 94/28633. The tone component encoder unit 32 and the non-tone component encoder unit 33 quantize the tone signal and the non-tone signal, respectively with different bit numbers.

The tone component encoder unit 32 and the non-tone component encoder unit 33 code the respective input signals. The tone component encoder unit 32 quantizes the tone component with a high number of quantization bits, namely, with a quantization precision set to be high. The non-tone component encoder unit 33 quantizes the non-tone signal with the number of quantization bits lower than in the tone component, namely, the quantization precision set to be low.

The tone component requires that information such as the position information and the frequency width of the extracted tone component be added, while the spectral signal of the non-tone component is quantized with a relatively small number of bits. Particularly when the audio waveform signal input to the encoder 1 has a particular spectrum on which energy concentrates, the above method effectively codes the signal at a high compression rate without causing a degradation in the auditory sense.

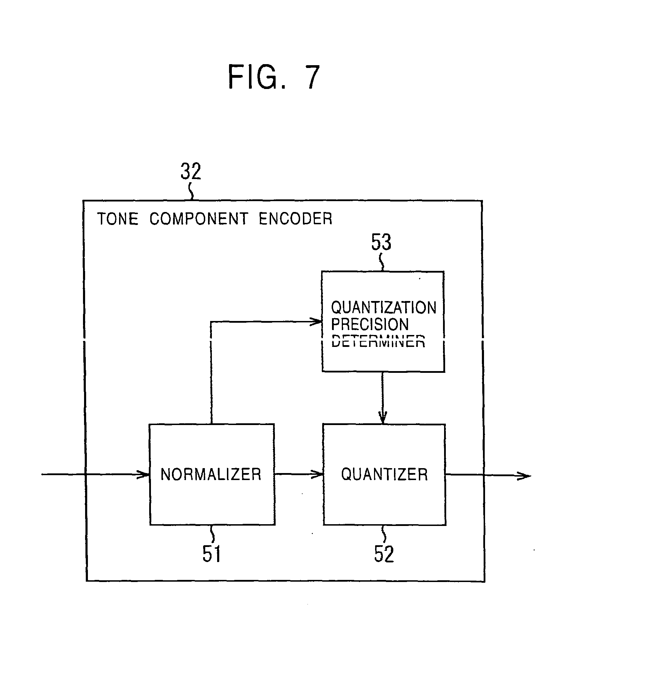

Fig. 7 is a block diagram illustrating in more detail the structure of the tone component encoder unit 32 of Fig. 5.

A normalizer 51 receives the spectral signal of the tone component, normalizes the spectral signal on a per quantization unit, and outputs the normalized signal to a quantizer 52. The quantization precision determiner 53 references the input quantization unit, calculates the quantization precision, and outputs the calculated quantization precision to the quantizer 52. Since the input quantization unit is the tone component, the quantization precision determiner 53 determines a high quantization precision. The quantizer 52 quantizes the normalized signal input from the normalizer 51 with the quantization precision determined by the quantization precision determiner 53 to generate a code. The quantizer 52 outputs coding information, such as the normalization coefficient information and the quantization precision information, in addition to the generated code.

The tone component encoder unit 32 also codes the position information of the tone component together with the tone component and outputs the coded position information together with the tone component.

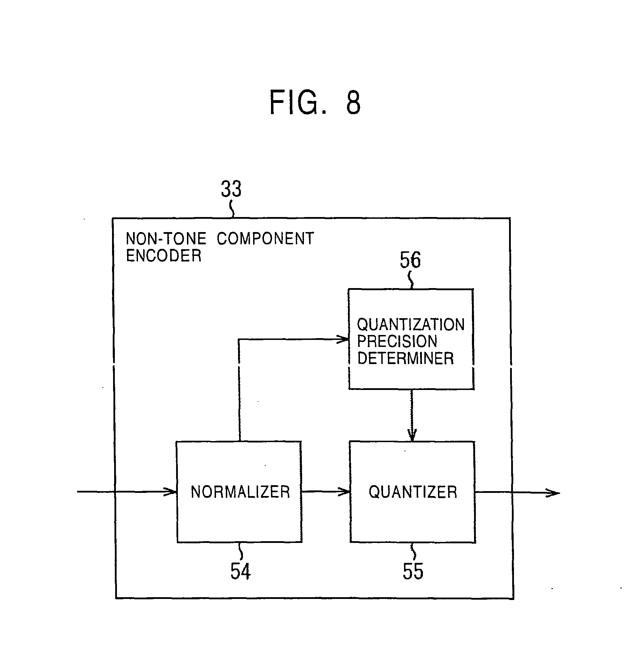

Fig. 8 is a block diagram illustrating in more detail the structure of the non-tone component encoder unit 33 of Fig. 5.

A normalizer 54 receives the spectral signal of the non-tone component, normalizes the spectral signal on a per quantization unit, and outputs the normalized signal to a quantizer 55. The quantization precision determiner 56 references the input quantization unit, calculates the quantization precision, and outputs the calculated quantization precision to the quantizer 55. Since the input quantization unit is the non-tone component, the quantization precision determiner 56 determines a quantization precision lower than the quantization precision in the tone component. The quantizer 55 quantizes the normalized signal input from the normalizer 54 with the quantization precision determined by the quantization precision determiner 56 to generate a code. The quantizer 55 outputs coding information, such as the normalization coefficient information and the quantization precision information, in addition to the generated code.

Coding efficiency may be increased more by variable-length coding so that a relatively short code length is allocated to a quantized spectral signal having a high frequency of occurrence and so that a relatively long code length is allocated to a quantized spectral signal having a low frequency of occurrence.

Returning to Fig. 2, the code string generator 13 generates, from a code of the signal frequency component output from the signal component encoder 12, a code string to be recorded onto a recording medium or to be transferred to another information processing apparatus through a data transfer path. The code string is constructed of a plurality of frames. The code string generator 13 then outputs the code string to the data separator 14. The code string generated by the code string generator 13 is audio data that is replayable at a high sound quality by an ordinary decoder.

Fig. 9 illustrates a format of a frame of the audio data replayable at a high sound quality data, and generated by the code string generator 13.

Arranged at the front end of each frame is a fixed length header containing a synchronization signal. The header also contains the number of split bands of the band split filter 21 of the converter 11 as previously discussed with reference to Fig. 3.

Tone component information relating to the separated tone component is recorded in each frame in succession to the header. The tone component information contains the number of tone components (for example, 3), a tone width, and quantization precision information relating to the quantization performed on the tone component by the tone component encoder unit 32 of Fig. 7. Recorded as the data of each of the tone components 41 through 43 are a normalization coefficient, a tone position, and a spectral coefficient.

In the tone component 41, the normalization coefficient is 30, the tone position is P1, and the spectral coefficient is SP1. In the tone component 42, the normalization coefficient is 27, the tone position is P2, and the spectral coefficient is SP2. In the tone component 43, the normalization coefficient is 24, the tone position is P3, and the spectral coefficient is SP3.

In each frame, non-tone component information is recorded in succession to the tone component information. The non-tone component information contains the number of quantization units (for example, 16), and the quantization precision information, the normalization coefficient information, and the spectral coefficient information of each of the 16 quantization units when the non-tone component encoder unit 33 of Fig. 8 codes the non-tone component.

Referring to Fig. 9, the quantization precision information is recorded on every quantization unit from the value 4 of the quantization unit [1] in the lowest frequency range to the value 4 of the quantization unit [16] in the highest frequency range. The normalization coefficient information is recorded on every quantization unit from the value 46 of the quantization unit [1] in the lowest frequency range to the value 8 of the quantization unit [16] in the highest frequency range. Used as the normalization coefficient information is a value proportional to dB of a power level of the spectral signal.

As shown, the spectral coefficient information of the non-tone component is divided into three regions of A, HC, and B. The number of regions, and a front end position Ad, a back end position Af, and a length (magnitude) R of the region HC are set to be optional values. If the length of the frame is fixed, free space may be set in succession to the spectral coefficient information as shown in Fig. 9.

Fig. 10 is a block diagram illustrating in more detail the structure of the data separator 14 of Fig. 2.

A controller 61 acquires setting information of a trial period input from an external operation unit (not shown), and controls a band limiting processor 62 in accordance with the setting information.

In accordance with the information of the trial period input from the controller 61 (for example, a trial start position, a trial period length, and information designating a trial band), the band limiting processor 62 generates the trial data by limiting the data of the frame to a designated band (trial band) based on the encode frame of the designated numbers (trial period) subsequent to the designated position (trial start position), from among code frames of the input original data. Of the spectral data of Fig. 6, the normalization coefficients of some quantization units in the high frequency region are minimized so that the low frequency band only are allowed to be decoded. The quality of a replayed content is thus lowered.

When the trial data is generated with the trial band being the quantization units [1] through [12], the controller 61 notifies the band limiting processor 62 that the quantization units [1] through [12] are contained in the trial band.

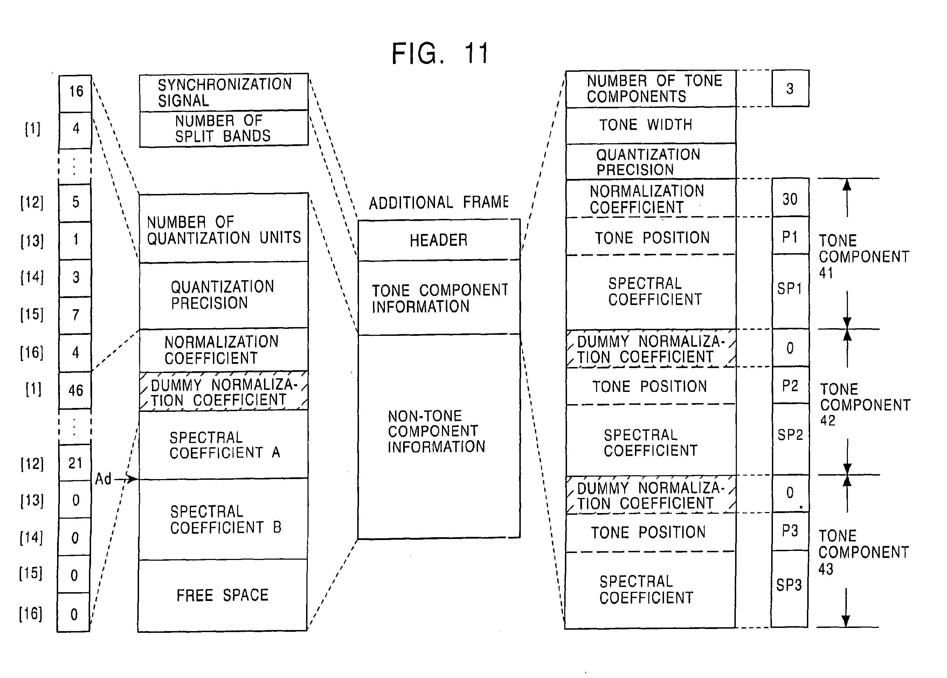

In response to the notification, the band limiting processor 62 minimizes the normalization coefficient information of the quantization units [13] through [16] not contained in the trial band as shown in Fig. 11, i.e., replaces the normalization coefficient information with dummy normalization coefficients, and outputs the original values of the quantization units [13] through [16] to an additional frame generator 64.

If a command to generate the trial data with the quantization units [1] through [12] in the trial band is instructed for the frame of Fig. 9, the values 18, 12, 10, and 8 of the normalization coefficient information of the quantization units [13] through [16] are replaced with zeroes as the dummy normalization coefficient information as shown in Fig. 11 while the original values 18, 12, 10, and 8 are output to the additional frame generator 64.

As in the non-tone component, the band limiting processor 62 minimizes the normalization coefficients of those of tone components outside the trial band while outputting the original values of the normalization coefficients to the additional frame generator 64. Referring to Fig. 11, the normalization coefficients 27 and 24 (see Fig. 9) of the tone components 42 and 43 contained in the quantization units [13] through [16] are minimized. The values 27 and 24 are output to the additional frame generator 64 as the original normalization coefficients.

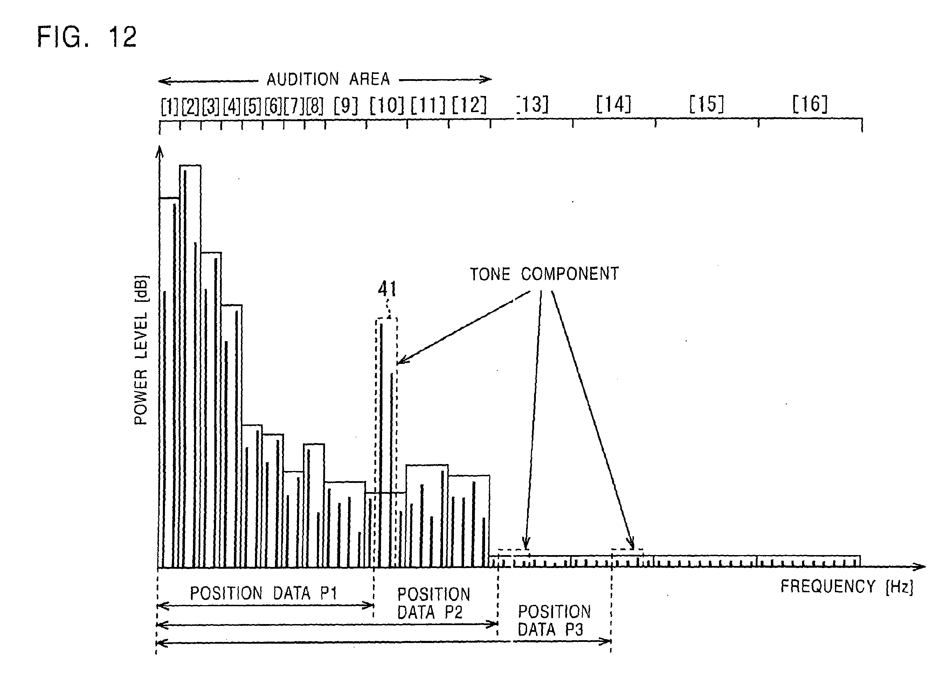

Fig. 12 illustrates the spectral signal of the trial data of Fig. 11 in the replayed state thereof. The trial data is the one with the normalization coefficients of the tone component outside the trial band and the non-tone component replaced with the dummy normalization coefficients.

Since the normalization coefficient information of the quantization units [13] through [16] is minimized outside the band-limited code frame (trial frame), the spectral signal of the non-tone component corresponding to each of these quantization units is also minimized. Since the normalization coefficients of the two tone components 42 and 43 contained in the quantization units [13] through [16] are also minimized, the spectral signals corresponding thereto are also minimized. When the trial data is decoded and replayed, only the narrow-band spectral signals of the quantization units [1] through [12] are replayed.

Referring to Fig. 11, the trial band is the quantization units [1] through [12]. The trial band may be set to be different from frame to frame. Alternatively, the normalization coefficients of all non-tone components and tone components may be minimized (with zero trial band) to mute the trial frame.

The generation of the trial frame by artificially degrading the original code frame may apply to all code frames, a frame string in one period of the content, or frames in a plurality of periods of the content.

When a frame string in at least one period is degraded in quality, a frame muting process is performed on a frame other than the designated period so that no original code frame may be contained in the trial data.

When the trial data is replayed, the trial data is output at a narrow-band quality only, or no replay sound is provided. In comparison with the original data replayed as in Fig. 9, quality degraded sound is output.

By minimizing the normalization coefficient of the non-tone component, the corresponding spectral coefficient information in a frequency range higher than the position Ad of Fig. 9 is minimized during the replaying of the trial data. The spectral coefficient information of the corresponding portion can be extracted, and the spectral coefficient information in the high frequency range adjacent to the extracted spectral coefficient information can be shifted and recorded to fill the location of extraction.

More specifically, a spectral information modifier 63 of Fig. 10 extracts the spectral coefficient information in the region HC having a record start position represented by Ad in Fig. 9, while re-recording the spectral coefficient in the region B, higher in frequency than the region HC, and having a record start position at position Af so that the spectral coefficient in the region B has a record start position at position Ad as shown in Fig. 11. The spectral information modifier 63 outputs the frame with the recording position modified in this way as the trial frame to a trial data generator 65.

The spectral information modifier 63 outputs, to the additional frame generator 64, the value of the original spectral coefficient extracted, and as necessary, information of the recording position and the length of the extracted spectral coefficient.

The extraction process of the spectral coefficient information may be performed on all fames or some optional frames.

When the variable-length coded spectral coefficient information is successively recorded from low frequency to high frequency, a portion of the spectral coefficient information that is minimized during decoding is extracted. In this way, the spectral coefficient information in the higher frequency range is shifted and recorded. The portion of variable-length code in the middle frequency range is thus missing. The recording position of the spectral coefficient information in the high frequency range is shifted from the original position thereof. Data in a higher frequency range including the extracted region is not decoded at all. In other words, the spectral coefficient information, contained in the trial data, higher in frequency than the trial band is extremely difficult to restore without the true values described in the additional data. The security level of the trial data is thus heightened.

When the normalization coefficient information is partially missing, or when the spectral coefficient information is partially missing, the estimating of the missing portion is much more difficult than encrypting a encryption key, having a relatively short key length, typically used in content delivery systems.

Even if the trial data is supplied with the extracted original value contained therein, it is difficult to estimate the true data because the recording position of the original data is shifted from the original position thereof.

An unauthorized attempt to change the trial data can degrade sound quality.

A user who is not permitted to replay the original data has extreme difficulty estimating the original data. Copyrights of creators and distributors are thus securely protected.

Even if the true data is successfully estimated against the missing portion in the trial data, damage does not extend over to another content. Such damage is limited in comparison with the case in which an encryption algorithm is deciphered. The present invention provides a security level higher than the case in which content data encrypted using a particular algorithm is distributed as the trial data.

The additional frame generator 64 is supplied with the true value of the normalization coefficient information of the tone component and the non-tone component modified by the band limiting processor 62, and the true value of the spectral coefficient information of a portion of the non-tone component extracted by the spectral information modifier 63. These true values are written in the additional data.

Instead of modifying the normalization coefficient information of the quantization unit outside the trial band, or at the time of modifying the normalization coefficient information of the quantization unit outside the trial band, the quantization precision information of the quantization unit outside the trial band may be modified by minimizing, for example. In this case, the band limiting processor 62 outputs the true value of the quantization precision information before modification to the additional frame generator 64 like true value of the normalization coefficient information.

The difficulty with illegally estimating the original data from the trial data without the additional data, in other words, the security level of the trial data is different from when the normalization coefficient information is modified to when the quantization precision information is modified. For example, a bit allocation algorithm that calculates the quantization precision information from the normalization coefficient information may be used during the generation of the original data. If the normalization coefficient information is described in the trial data with only the quantization precision information outside the trial band modified, there is a risk that the true quantization precision information is estimated from the normalization coefficient information.

In contrast, it is difficult to estimate the normalization coefficient information from the quantization precision information. Even if the normalization coefficient information only is modified, the security level of the trial data is still high.

By modifying the values of both the quantization precision information and the normalization coefficient information outside the trial band, the security risk of an unauthorized estimation of the original data is even more reduced. It is perfectly acceptable that the quantization precision information and the normalization coefficient information outside the trial band are selectively modified.

Returning to Fig. 10, the additional frame generator 64 receives, on every frame of the original data, the quantization precision information and the normalization coefficient information outside the trial band from the band limiting processor 62 and the spectral coefficient information outside the trial band from the spectral information modifier 63. In response, the additional frame generator 64 generates an additional frame forming the additional data to set the trial data to be of high quality.

If the trial period of the trial band is set to be the quantization units [1] through [12] as already discussed with reference to Fig. 11, the normalization coefficient information (hatched portions in Fig. 11) of the two tone components (tone components 42 and 43) contained in the quantization units [13] through [16] and four pieces of the normalization coefficient information (hatched portions in Fig. 11) of the non-tone component, in each frame of the trial period of the trial data, are modified to be minimized dummy data. The true values of these pieces of data are described in the additional frame. A portion (region HC in Fig. 9) of the spectral coefficient information of the non-tone component of the quantization units [13] through [16] outside the trial band is also replaced with dummy data. The true value of the region HC is described in the additional frame.

Fig. 13 illustrates a format of an additional frame of the additional format generated by the additional frame generator 64. As shown, the additional frame corresponds to the trial frame of Fig. 11.

Described as information relating to the tone component are the value 27 as the true normalization coefficient information of the tone component 42, before being replaced with the dummy, and the value 24 as the true normalization coefficient information of the tone component 43, before being replaced with the dummy.

Also described as the non-tone component are the values 18, 12, 10, and 8 as the true normalization coefficient information of the quantization units [13] through [16] outside the trial band, before being replaced with the dummy, and the true value of the region HC, the original position Ad of the region HC, and the length R of the region HC as the extracted spectral coefficient information.

Referring to Fig. 13, the position information and the length information of the spectral coefficient information extracted from the trial frame are described in the additional frame. Optionally, the length information may be undescribed. More specifically, the extraction position of the spectral coefficient information is set to be a front end of the spectral coefficient information outside the trial band so that the original position of the extracted spectral coefficient information is determined from the position (quantization unit number) of the normalization coefficient information replaced with the dummy data, out of the normalization coefficient information of the non-tone component.

The extraction position of the spectral coefficient information is set to be behind (below) the front end of the spectral coefficient information outside the trial band. In such a case, the position information of the extracted spectral coefficient information must be described in the additional frame as shown in Fig. 13.

The amount of the additional data is decreased by describing a portion of the additional data in the free space of the trial frame. Communication time is thus reduced when a user downloads the additional data.

The trial data generator 65 of Fig. 10 produces the trial data by generating a header for the trial data, and attaching the header to a supplied trial frame string. The header of the trial data contains link information of the additional data (for example, address information such as a uniform resource locator (URL) of a server that downloads the additional data), a content ID identifying a content, a title of the content, and information relating to coding.

An additional data generator 66 generates additional data from an input additional frame string.

The trial data and the additional data, thus generated, are output to the delivery server 2. The trial data from the delivery server 2 is then delivered to the data replay apparatus 5. The delivery server 2 also delivers the additional data to the requesting data replay apparatus 5. Upon receiving the additional data, the data replay apparatus 5 restores the original data in a process to be discussed later.

Referring to a flowchart of Fig. 14, a trial data generation process performed by the data separator 14 of Fig. 10 will now be discussed.

In step S1, the controller 61 acquires setting values (setting information) input through the operation unit, relating to the trial period input through the operation unit, including the trial start position, the trial period length, and the trial band.

As discussed with reference to Figs. 11 and 13, it is assumed that the quantization units [1] through [12] are set as the trial band. It is also assumed that the front end of a content is set as the trial start position and that the entire length of the content is set as the trial period. In other words, all code frames are band limited to the quantization units [1] through [12]. The controller 61 supplies the band limiting processor 62 with the setting values of the trial period.

In step S2, the band limiting processor 62 receives any frame contained in the frame string corresponding to the original data, namely, the frame discussed with reference to Fig. 9 replayable at high quality sound.

In step S3, the band limiting processor 62 replaces the value of the normalization coefficient of the tone component outside the trial band with a dummy value zero (dummy data) for minimization, for example, based on the setting values of the trial period supplied in step S1 if the input code frame is contained in the trial period (in other words, if the input code frame is set to be a frame forming the trial data). In this way, the spectral coefficient of the tone component outside the trial band is minimized during the replay process of the code frame.

If the input code frame is not contained in the trial period, the band limiting processor 62 sets all values of the normalization coefficients of the tone components to be dummy zero for minimization. All spectral coefficients of the tone components are thus minimized during the replay process of the code frame.

The band limiting processor 62 supplies the additional frame generator 64 with the original value of the spectral coefficient information of the tone component now replaced with the dummy data to describe the original value of the spectral coefficient information in the additional data in step S7 to be discussed later.

In step S4, the band limiting processor 62 replaces the value of the normalization coefficient information of the non-tone component outside the trial band with dummy zero for minimization if the input code frame is contained in the trial period. In this way, the spectral coefficient of the non-tone component outside the trial band is minimized during the replay process of the code frame.

The band limiting processor 62 replaces the values of all normalization coefficients of the non-tone component with the dummy zero for minimization if the input code frame is not contained in the trial period. All spectral coefficients of the non-tone components are thus minimized during the replay process of the code frame.

Furthermore, the band limiting processor 62 supplies the additional frame generator 64 with the original value of the normalization coefficient information of the non-tone component, now replaced with the dummy value, to describe the original value of the normalization coefficient information in the addition data in step S7 to be discussed later.

In step S5, the spectral information modifier 63 determines the front end position Ad and bit length R of a portion of the spectral coefficient information of the non-tone component higher than the trial band to extract the portion of the spectral coefficient information if the input code frame falls within the trial period.

In step S6, the spectral information modifier 63 extracts the spectral coefficient information HC (the spectral coefficient information of the region HC shown in Fig. 11) having the front end position Ad and the bit length R determined in step S5, and shifts the record start position of spectral coefficient information adjacent to the extracted spectral coefficient information, namely, the spectral coefficient information present behind position (Ad+R) to the position Ad. This arrangement makes it difficult to estimate the original recording position of the extracted spectral coefficient information.

The spectral information modifier 63 determines the front end position Ad and the bit length R to extract a portion of the spectral coefficient information of any non-tone component if the input frame does not fall within the trial period in step S5. In step S6, the spectral information modifier 63 extracts the spectral coefficient information HC having the front end Ad and the bit length R, and shifts the record start position of the spectral coefficient information behind the position (Ad+R) to the position Ad so that the original record position of the extracted spectral coefficient information may not be estimated.

In the determination of the extraction position of the spectral coefficient information, a pseudo-random number X is generated, and the front end position of the spectral coefficient information outside the trial band is added to a remainder that is obtained by dividing the pseudo-random number X by a constant Cx. The resulting sum is then regarded as the front end position Ad of the spectral coefficient information to be extracted. For example, now, the constant Cx is 64, and the front end position of the spectral coefficient information outside the trial band is P. The position Ad at which the spectral coefficient information is extracted may take a random number within a range of from P through (P+63).

In the determination of a length of extraction of the spectral coefficient information, a pseudo-random number Y is generated, and a remainder that is obtained by dividing the pseudo-random number Y by a constant Cy may be regarded as the bit length R of the spectral coefficient information to be extracted. In this case, if the constant Cy is 32, the bit length R of the spectral coefficient information to be extracted may take a random number within a range from 0 through 31.

To generate the pseudo-random number, any 100-digit number is first selected, and then squared, and middle 100 digits are selected from the squared number. These steps may be repeated.

The spectral information modifier 63 outputs the spectral coefficient information HC thus extracted, and the front end position Ad and the bit length R thereof to the additional frame generator 64.

When a portion of the spectral coefficient information of the non-tone component is extracted in steps S5 and S6, spectral coefficient information having an optional length may be extracted from any position as long as the spectral coefficient information is higher in frequency than the trial band. For example, if the spectral coefficient information is variable-length coded, spectral coefficient information lower in frequency may be extracted. This arrangement makes it even more difficult to illegally estimate the spectral coefficient information higher in frequency than the extracted spectral coefficient information.

The position and length of the spectral coefficient information may be set to be even more difficult to estimate by changing the extraction position and the length of the spectral coefficient information from frame to frame. The security level of the trial data is further heightened.

The frame may be fixed or variable in length. If the length of the frame is fixed, a free variable space is left behind the frame by extracting the spectral coefficient information randomly as previously described.

In the variable frame length, the spectral information may be extracted randomly. The spectral information adjacent to the extracted information is shifted and described to fill the space left behind the extracted information. The amount of data of the entire trial data is reduced more than in the fixed-length frame. If the frame is variable in length, a flag, for example, is described to indicate the back end of each frame during the replay process.

Returning to Fig. 14, the additional frame generator 64 generates, in step S7, the additional frame from the normalization coefficient information of the tone component and the non-tone component input from the band limiting processor 62, a portion of the spectral coefficient information of the non-tone component input from the spectral information modifier 63, and the information of the position and bit length of the extracted spectral coefficient in the trial frame as shown in Fig. 13.

In step S8, the controller 61 determines whether the frame processed heretofore (frame processed in steps S2 through S7) is last frame of the trial data. If it is determined in step S8 that the processed frame is not last frame (No), the algorithm loops to step S2. The same process in step S2 and subsequent steps is repeated.

If it is determined in step S8 that the processed frame is last frame (Yes), the algorithm proceeds to step S9. The trial data generator 65 generates a header of the trial data, attaches the generated header to the trial frame string, and sends the resulting data as the trial data to the delivery server 2.

In step S10, the additional data generator 66 generates a header for the additional data, attaches the generated header to the additional frame, and outputs the resulting data as the additional data corresponding to the trial data to the delivery server 2. The generation process of the trial data is thus completed.

Referring to Fig. 14, the spectral coefficient information is extracted from the original data to produce the trial data, and the different spectral coefficient contained in the original data is re-described thereby filling the location of the space left after extraction. The information to be extracted from the original data may be the normalization coefficient information or the quantization precision information in addition to the spectral coefficient information. In such a case, another normalization coefficient information or another quantization precision information, contained in the original data, may be shifted and described to fill the spacing left behind the extracted normalization coefficient information or the extracted quantization precision information in the same manner as the spectral coefficient is extracted.

The trial data thus generated may be delivered to users through the computer network 4 as shown in Fig. 1, or may be recorded onto a variety of recording media owned by users by an MMK installed in a store for distribution. If a user likes a content (original data) after replaying the trial data, he or she pays a predetermined fee to a supplier of the content data through a predetermined method to acquire the additional data, and then restores the original data from the trial data using the additional data. The user is thus free to replay the high-quality original data or to record the high-quality original data onto a predetermined recording medium.

The process of separating the trial data from the additional data in the original data may be performed on the entire original data of the content to corrupt the entire original data into the trial data. To stimulate buying interest of consumers, the trial data may be replayed for a predetermined period of time at the same quality as the original data.

In the trial data generation process, it is not necessary to replace the original data of the code frame within the predetermined period of time (the frame during which trial is permitted at the high sound quality) with the dummy data. It is not necessary to extract a portion of the original data within the same period, either. Recording the true value of the original data in the additional data is not necessary within the same period, either.

The user may be permitted to listen to the trial data at a predetermined quality level within a predetermined period of time only.

In such a case, in the trial data generation process, the code frame outside the predetermined period of time is muted. To this end, all normalization coefficient information of that frame must be replaced with the dummy data, and the true values of all normalization coefficient information must be recorded in the additional data.

The data replay apparatus 5 of Fig. 1 processes the trial data and the additional data thus constructed. The operation of the data replay apparatus 5 will now be discussed.

Fig. 15 is a block diagram illustrating the structure of the data replay apparatus 5.

A code string decomposer 91 receives the trial frame contained in the trial data, decomposes the code string, extracts a code of each signal component, and outputs the resulting code to the code string restorer 93.

When a user instructs the controller 92 to replay data input to the code string decomposer 91 using the operation unit (not shown), the controller 92 controls the additional data input unit 96 and the code string restorer 93.

When the controller 92 is instructed to restore the original data from the trial data and to replay the original data at a high-quality sound level, the controller 92 controls the additional data input unit 96, thereby acquiring the additional data. The controller 92 supplies the code string restorer 93 with the acquired additional data, thereby causing the code string restorer 93 to process the trial frame at a high-quality level.

If the additional data is encrypted data, the additional data input unit 96 decodes the additional data under the control of the controller 92, and supplies the controller 92 with the decrypted additional data as the additional frame.

To replay the data at a high-quality sound level, the code string restorer 93 restores the trial frame supplied from the code string decomposer 91 into the code frame as high-quality data using the additional frame supplied by the controller 92. The restored code frame is then output to a signal component decoder 94.

If no high-quality replaying is performed without the need for restoring the original data from the trial data (in other words, the trial data is replayed as is), the controller 92 controls the code string restorer 93 without acquiring the additional data from the additional data input unit 96, thereby causing the code string restorer 93 to replay the trial data. The code string restorer 93 supplies the signal component decoder 94 with the code frame of the trial data, supplied by the code string decomposer 91, as is.

The signal component decoder 94 decodes the input trial data or the code frame of the high-quality data, and outputs the decoded data to an inverse converter 95.

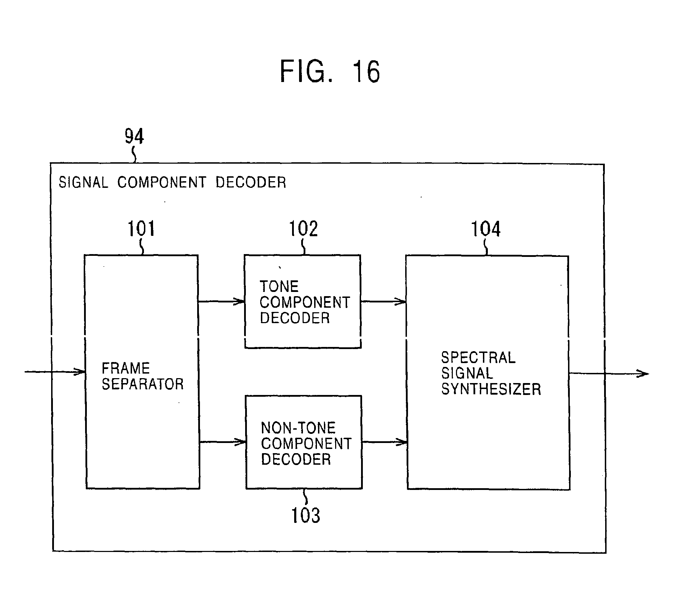

Fig. 16 is a block diagram illustrating in detail the structure of the signal component decoder 94. The signal component decoder 94 decodes the code frame when the code frame is divided into the tone component and the non-tone component before coding.

A frame separator 101 receives the code frame discussed with reference to Figs. 9 and 11, separates the code frame into the tone component and the non-tone component, and outputs the tone component and the non-tone component to a tone component decoder 102 and a non-tone component decoder 103, respectively.

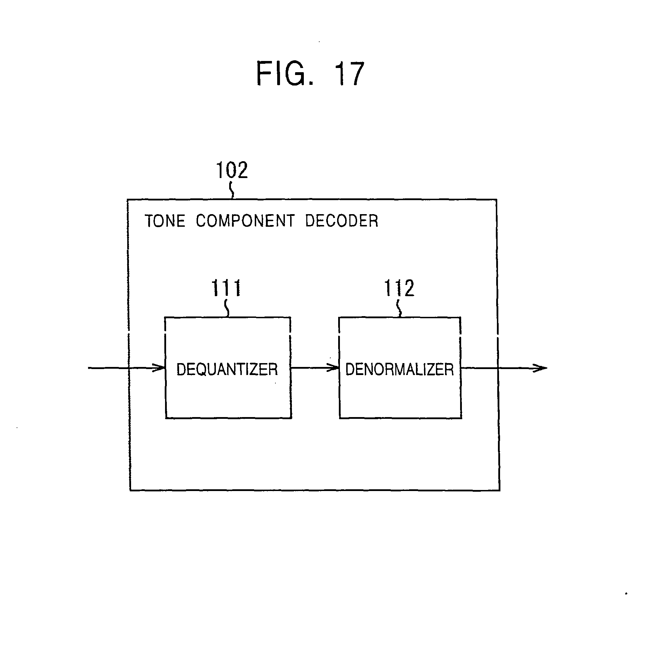

Fig. 17 is a block diagram illustrating in more detail the structure of the tone component decoder 102 of Fig. 16.

A dequantizer 111 dequantizes the input coded data, and outputs the dequantized data to a denormalizer 112. The denormalizer 112 denormalizes the data input thereto. In other words, the dequantizer 111 and the denormalizer 112 perform a decoding process, thereby outputting a spectral signal having the tone component.

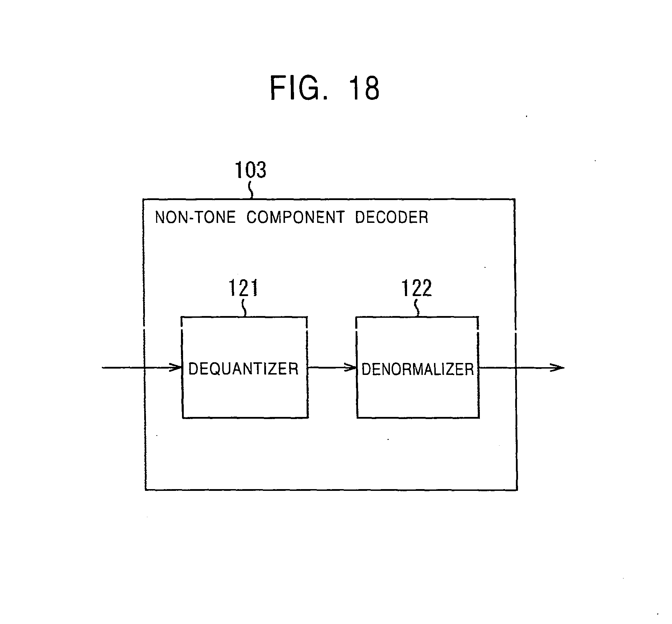

Fig. 18 is a block diagram illustrating in more detail the structure of the non-tone component decoder 103.

A dequantizer 121 dequantizes the input coded data, and outputs the dequantized data to a denormalizer 122. The denormalizer 122 denormalizes the data input thereto. In other words, the dequantizer 121 and the denormalizer 122 perform a decoding process, thereby outputting a spectral signal having the non-tone component.

A spectral signal synthesizer 104 of Fig. 16 receives the spectral signals output from the tone component decoder 102 and the non-tone component decoder 103, and synthesizes the signals. The spectral signal synthesizer 104 generates the spectral signal discussed with reference to Fig. 6 if the input signal is based on the high-quality data, or the spectral signal discussed with reference to Fig. 12 if the input signal is based on the trial data. The resulting spectral signal is then output to an inverse converter 95 (see Fig. 15).

If the coded data is not divided into the tone component and the non-tone component, the frame separator 101 may be dispensed with. The decoding process may be performed using only one of the tone component decoder 102 and the non-tone component decoder 103.

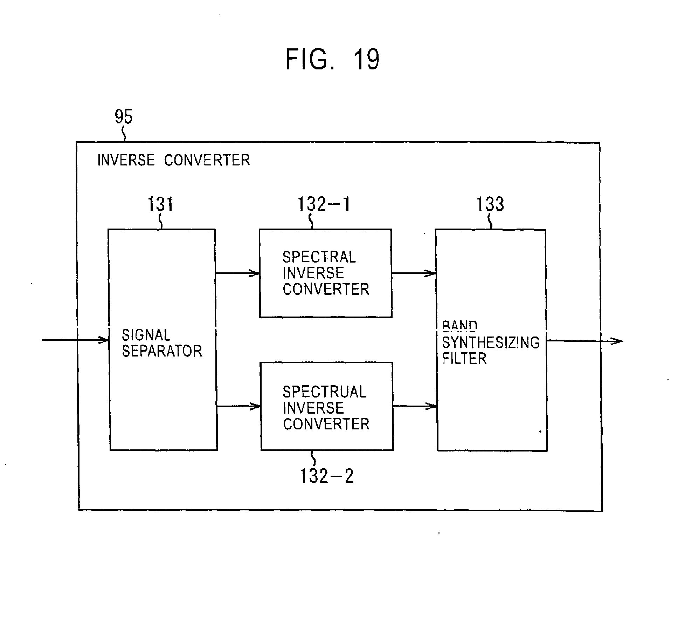

Fig. 19 is a block diagram illustrating in more detail the structure of the inverse converter 95 of Fig. 15.

A signal separator 131 separates the signal input thereto according to the number of split bands described in the header of the input code frame. The number of split bands is 2 here. The signal separator 131 separates the input spectral signal into two bands, and outputs the respective band signals to a spectral inverse converter 132-1 and a spectral inverse converter 132-2.

The spectral inverse converters 132-1 and 132-2 perform spectral inverse conversion on the input spectral signals, and outputs the resulting band signals to a band synthesizing filter 133. The band synthesizing filter 133 synthesizes the input band signals, and outputs the resulting signal.

The signal (for example, an audio PCM signal) output from the band synthesizing filter 133 is converted into an analog signal by a digital-to-analog converter (not shown), and is then output as a sound from a loudspeaker. The signal output from the band synthesizing filter 133 may be output to another apparatus through a network.

A data replay operation of the data replay apparatus 5 of Fig. 15 will now be discussed with reference to a flowchart of Fig. 20.

Based on an output from the operation unit, the controller 92 determines in step S41 whether a user instructs the data replay apparatus 5 to replay the trial data at the high-quality level, namely, whether the user instructs the data replay apparatus 5 to restore the original data from the trial data and to replay the restored data.

If the controller 92 determines in step S41 that the user instructs the data replay apparatus 5 to replay the data at the high quality (Yes), the algorithm proceeds to step S42. The controller 92 controls the additional data input unit 96, thereby acquiring the additional data. More specifically, the additional data input unit 96 receives the additional data under the control of the controller 92, and supplies the controller 92 with the additional frame string. The additional data is acquired by the additional data input unit 96 from the delivery server 2 through the computer network 4, for example.

If it is determined in step S41 that no high-quality replay is instructed (No), in other words, the trial quality replay is instructed, step S42 is skipped.

In step S43, the code string decomposer 91 receives the trial frame of the trial data. In step S44, the code string decomposer 91 decomposes the input code string, and outputs the decomposed code to the code string restorer 93.

In step S45, the controller 92 determines whether or not to perform high-quality replay as in step S41. If the controller 92 determines not to perform high-quality replay (No), the controller 92 controls the code string restorer 93 so that the trial frame input to the code string restorer 93 is directly output to the signal component decoder 94. The algorithm then proceeds to step S47.

If the controller 92 determines to perform high-quality replay in step S45 (Yes), the controller 92 supplies the code string restorer 93 with the additional data corresponding to the trial frame acquired in step S42.

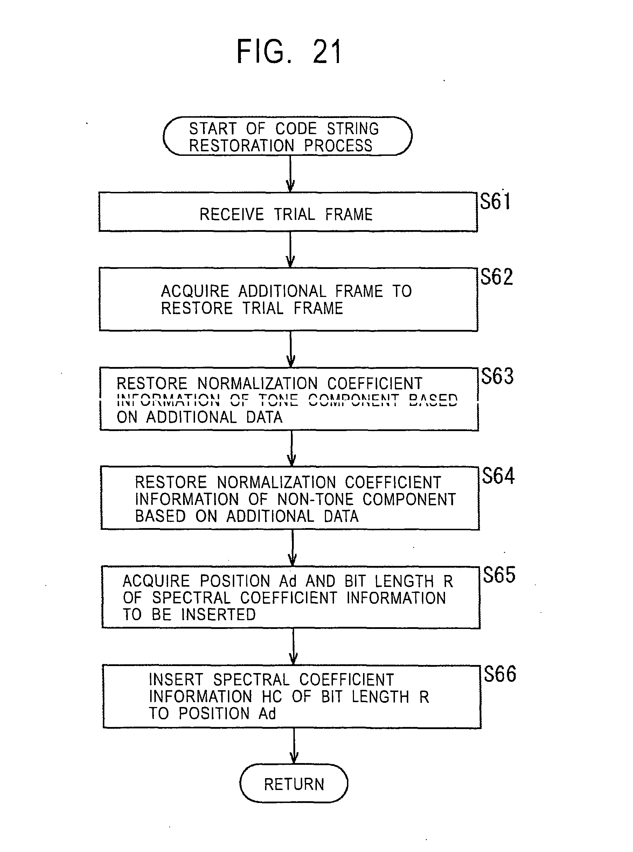

In step S46, the code string restorer 93 performs a code string restoration process for restoring the code string frame of the original data from the trial frame using the additional frame supplied from the controller 92. The code string restoration process will be discussed later in detail with reference to a flowchart of Fig. 21.

In step S47, the signal component decoder 94 separates the input code string (the trial data or the restored data) into the tone component and the non-tone component, and dequantizes and denormalizes each of the tone component and the non-tone component for decoding. The signal component decoder 94 synthesizes the spectral signals generated as a result of decoding and outputs the synthesized spectral signal to the inverse converter 95.

In step S48, the inverse converter 95 band splits the input spectral signal as necessary, inverse converts the spectral signals, and band synthesizes the inverse converted signal. A time-series signal thus results.

In step S49, the controller 92 determines whether any code frame to be replayed is present (i.e., whether any code frame not yet replayed is present). If the controller 92 determines that a code frame to be replayed still remains (Yes), the algorithm loops to step S43 to repeat step S43 and subsequent steps. If it is determined in step S49 that there is no code frame to be replayed (No), or if it is determined that the user has issued a command to quit the replay process, the controller 92 quits the replay process.

The time-series signal, generated through the inverse conversion of the inverse converter 95, is converted by a digital-to-analog converter into an analog signal. The analog signal is then replayed and output from a loudspeaker of the data replay apparatus 5 or output to another apparatus through a network.

In the above discussion, the original data is restored from the trial data containing the tone component and the non-tone component, both being separated and coded, and is decoded. The restoration process and the replay process may be similarly performed even if the tone component is not separated from the non-tone component.

A code string restoration process performed in step S46 of Fig. 20 will now be discussed with reference to a flowchart of Fig. 21.

In step S61, the code string restorer 93 receives the trial frame supplied from the code string decomposer 91.

In step S62, the controller 92 acquires, from the additional data input unit 96, the additional data corresponding to the trial frame received by the code string restorer 93 in synchronization with the reception of the trial frame by the code string restorer 93. The controller 92 supplies the acquired additional frame to the code string restorer 93. The code string restorer 93 is thus supplied with the predetermined trial frame and the additional frame corresponding to the trial frame.

In step S63, the code string restorer 93 restores the normalization coefficient information of the tone component of the input trial frame from the dummied state thereof, based on the normalization coefficient information of the tone component described in the additional frame supplied from the controller 92.

For example, when being supplied with the trial frame of Fig. 11 and the additional data of Fig. 13, the code string restorer 93 restores the dummied normalization coefficient zero of the tone component 42 to the original normalization coefficient 27 described in the additional frame and the dummied normalization coefficient zero of the tone component 43 to the original normalization coefficient 24.

In step S64, the code string restorer 93 restores the normalization coefficient information of the non-tone component of the input trial frame based on the normalization coefficient information of the non-tone component described in the additional frame supplied from the controller 92.

When the code string restorer 93 is supplied with the trial frame of Fig. 11 and the additional data of Fig. 13, the dummied normalization coefficient information zero of the quantization units [13] through [16] is respectively restored to the original normalization coefficients 18, 12, 10, and 8 described in the additional frame.

In step S65, the code string restorer 93 acquires, from the supplied additional frame, the original spectral coefficient information HC of the non-tone component, the original recording position Ad and the bit length R of the trial frame of the spectral coefficient information HC.

If the data replay apparatus 5 itself is designed to acquire the recording position of the original spectral coefficient information from the position of the dummied normalization coefficient (quantization unit number), the recording position of the original spectral coefficient information is not acquired from the additional frame here.

In step S66, the code string restorer 93 inserts the spectral coefficient information HC of the original non-tone component to the location having the position Ad (the original recording position of the spectral coefficient information) and the bit length R based on the information acquired in step S65.

The code string restorer 93 shifts, the spectral coefficient information recorded at the position Ad in the trial frame by the bit length R into the higher frequency side, thereby restoring all spectral coefficient information to the original recording position thereof. The portion from which the spectral coefficient information was extracted has been filled with the higher frequency spectral coefficient information that was continuous to the extracted spectral coefficient.

The code string restoration process is now completed, followed by a process in step S47 and subsequent steps of Fig. 20.

The structure and operation of a data recording apparatus 141 will now be discussed. The data recording apparatus 141 restores the original data from the trial data and the additional data, and records the original data onto a predetermined recording medium.

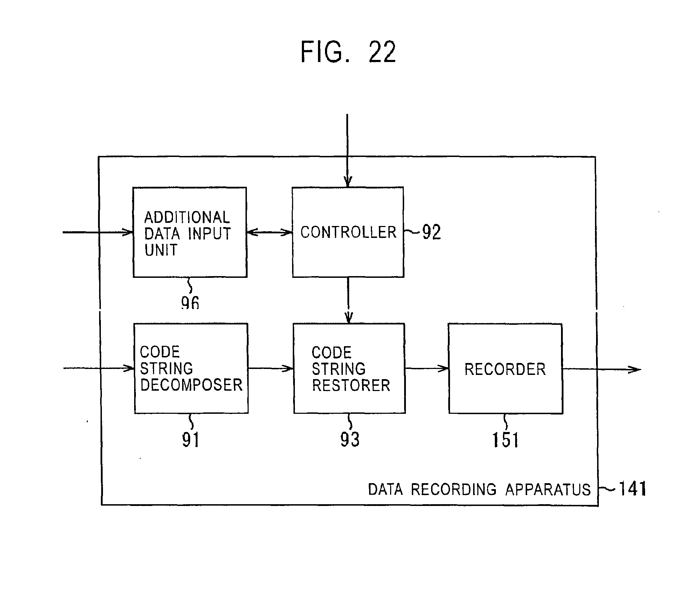

Fig. 22 is a block diagram illustrating the structure of the data recording apparatus 141. The elements identical to those discussed with reference to the data replay apparatus 5 of Fig. 15 are designated with the same reference numerals, and the discussion thereof is omitted here.

The code string decomposer 91 records the trial data at high quality, more specifically, receives the trial frame, decomposes the code string, and extracts codes of each signal component when being instructed by a user to restore the original data from the trial data and to record the original data.

By controlling the additional data input unit 96, the controller 92 receives the additional data, and supplies the code string restorer 93 with the received additional data as necessary. The controller 92 controls the code string restorer 93 to convert the trial frame to high quality.

Under the control of the controller 92, the additional data input unit 96 decrypts the additional data, if the additional data is encrypted, and supplies the controller 92 with the decrypted data as the additional data.

To perform high-quality recording, the code string restorer 93 restores the code frame of high quality from the trial frame supplied from the code string decomposer 91 using the additional frame supplied from the controller 92. The code string restorer 93 outputs the restored code frame to a recorder 151.

The recorder 151 attaches a content header containing a content ID, etc. to the code frame string of high quality supplied from the code string restorer 93, and then records the code frame string onto the recording medium. For example, the recorder 151 records the data in a predetermined method onto the recording medium, such as a magnetic disk, an optical disk, a magneto-optical disk, a semiconductor memory, or a magnetic tape. The recorder 151 may internally record the data such as on a memory mounted on a board, or onto an internal hard disk (namely, a recording medium that is not detachable from the data recording apparatus 141).

If the recorder 151 is of a type that can record data onto an optical disk, the recorder 151 may include an optical unit including an encoder that converts data into the one having a format appropriate for recording to the optical disk, a laser light source such a laser diode, a variety lenses, and a polarization beam splitter, a spindle motor for rotating the optical disk, a driver for driving the optical unit to a target track on the optical disk, and a controller for controlling these elements.

The recording medium loaded in the recorder 151 may be the same recording medium as the one that records the trial data input to the code string decomposer 91 or the additional data input to the additional data input unit 96. In this case, the data recording apparatus 141 reads the trial data recorded on the recording medium, converts the trial data to high-quality original data, and overwrites the original data onto the same recording medium

A data recording process of the data recording apparatus 141 will now be discussed with reference to a flowchart of Fig. 23.

In step S81, the controller 92 determines whether to restore the original data from the trial data and to perform high-quality recording. If the controller 92 determines that no high-quality recording is to be performed (No) because of no such instruction from a user, the algorithm ends. It is acceptable that the trial data may be recorded onto a predetermined recording medium as is.

If the controller 92 determines in step S81 that the high-quality recording is to be performed (Yes), step S82 and subsequent steps are performed.

In step S82, the additional data input unit 96 receives the additional data, acquires the additional frame string, and supplies the controller 92 with the additional frame string, under the control of the controller 92.

In step S83, the code string decomposer 91 receives the trial frame of the trial data (code frame). In step S84, the code string decomposer 91 decomposes the input code string and outputs the decomposed codes to the code string restorer 93. The controller 92 supplies the code string restorer 93 with the additional frame corresponding to the trial frame supplied to the code string decomposer 91, out of the additional frames supplied from the additional data input unit 96.

In step S85, the code string restorer 93 performs the code string restoration process previously discussed with reference to Fig. 21, thereby restoring the code frame of the original data from the trial frame using the additional frame supplied from the controller 92.

In step S86, the recorder 151 attaches, as appropriate, header information to the code string supplied from the code string restorer 93, and records the resulting data onto the recording medium.

In step S87, the controller 92 determines whether any code frame still remains unrecorded from among the trial frames to be converted to high-quality version and to be recorded. If the controller 92 determines that any code frame to be recorded remains (Yes), the algorithm loops to step S83 to repeat step S83 and subsequent steps.

If the controller 92 determines in step S87 that no frame to be recorded remains (No), in other words, the controller 92 determines that all low-quality portions are converted to high-quality and recorded, the algorithm ends.

The high-quality original data is thus recorded onto the predetermined recording medium. By mounting such a recording medium onto a portable audio player, a user may enjoy the original data.

A portion of information is extracted from the original data, and the remaining original data is then shifted to a location different from the original position thereof to generate the trial data. As a result, the estimation of the high-quality original data from the trial data becomes difficult, and the security level of the trial data is heightened. If the information extracted from the original data is a portion of the variable-length code string, the security level of the trial data is set to be even higher.

A content provider generates and delivers the trial data, namely, the original data with a portion thereof dummied, and the additional data in a small amount containing the true value of the original data. The content provider thus sells the content while promoting sales of the content with copyright protected.

The original data is set to be of low-quality or is muted on a frame by frame basis. More specifically, a user is allowed to listen to the trial data frame by frame on a trial basis. Trial data appealing to the user's desire to purchase is thus generated.

The additional data is generated from the additional frame in which the true value of the extracted data (such as the true normalization coefficient information or the true spectral coefficient information) is described. Using the additional data, the original data is restored from the trial data.

The user of the content easily gets the original data by purchasing the additional data to replay or record the trial data at high quality. In other words, the user does not need to download the entire original data after listening to the trial data.

In the above discussion, an audio signal is handled in the generation of the trial data of the content and the additional data corresponding to the trial data, and in the process of restoring, replaying, and recording the original data from the trial data and the additional data. The present invention is also applicable to content data of a video signal only, or content data of a combination of an audio signal and a video signal.

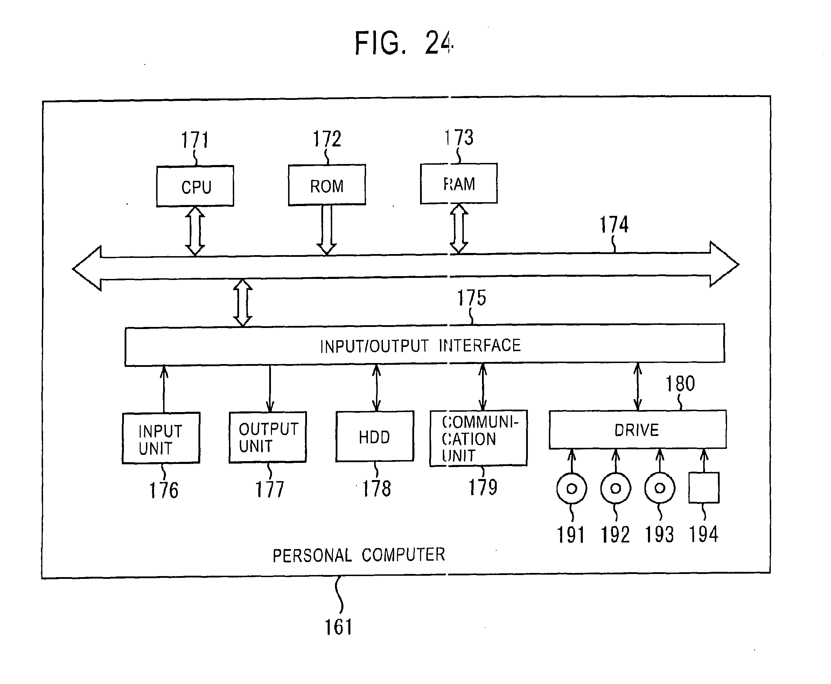

The above series of process steps may be performed using hardware or software. For example, a personal computer 161 of Fig. 24 may constitute each of the encoder 1, the data replay apparatus 5, and the data recording apparatus 141.

Referring to Fig. 24, a central processing unit (CPU) 171 performs a variety of processes in accordance with the program stored in a read-only memory (ROM) 172, or the program loaded from a hard disk drive 178 to a random-access memory (RAM) 173. The RAM 173 stores data the CPU 171 needs to perform various processes.

The CPU 171, the RAM 172, and the RAM 173 are interconnected through an internal bus 174. The internal bus 174 is connected to an input/output interface 175.

Also connected to the input/output interface 175 are an input unit 176 including a keyboard, a mouse, etc., an output unit 177 including a display, the storage unit 178 including a hard disk, and a communication unit 179 including a modem, a terminal adapter, etc. The communication unit 179 performs a communication process through a variety of networks including the computer network 4 of Fig. 1.

Also connected to the input/output interface 175 is a drive 180 as necessary. A storage medium, such as a magnetic disk 191, an optical disk 192, a magneto-optical disk 193 or a semiconductor memory 194, is loaded onto the drive 180, as necessary. A computer program read from one of such media is installed to the hard disk 178 as necessary.

If the series of process steps is performed using software, a computer program of the software may be installed from a network or a recording medium to a memory of a computer assembled into dedicated hardware, or into a general-purpose computer that performs a variety of functions by installing various programs thereon.

The recording medium may be a package medium, which may be distributed separately from the apparatus to supply the user with the software programs as shown in FIG. 24. The recording medium may be the magnetic disk 191 (such as a floppy disk), the optical disk 192 (such as a CD-ROM (Compact Disk-Read Only Memory) and a DVD (Digital Versatile Disk)), the magneto-optical disk 193 (such as an MD (Mini Disk) or the semiconductor memory 194. The recording medium also may be the ROM 172 or the hard disk 178, each of which is supplied in the mounted state thereof in the apparatus and has a computer program stored therewithin.

The process steps discussed in this specification are sequentially performed in the time series order as stated. Alternatively, the steps may be performed in parallel or separately.

## Claims

1. A data generation method for generating a predetermined data string from a first data string, the data generation method comprising:
a first generating step for generating a second data string by extracting first data contained in the first data string and by arranging second data, contained in the first data string, at a location from which the first data is extracted; and
a second generating step for generating a third data string that contains the extracted first data and is used to restore the first data string from the second data string generated in the first generating step.

2. A data generation method according to claim 1, wherein at least one of a recording position of the extracted first data within the first data string and a data length of the extracted first data changes randomly.

3. A data generation method according to claim 1, wherein the third data string contains at least one of information representing a recording position of the extracted first data within the first data string and information representing a data length of the extracted first data.

4. A data generation method according to claim 1, wherein the first data is extracted in the first generating step in a manner such that an output that is obtained by replaying the second data string is inferior in quality to an output that is obtained by replaying the first data string.

5. A data generation method according to claim 1, further comprising a coding step for coding input data, wherein, in the first generating step, the first data is extracted from the first data string that is the data coded in the coding step, and wherein the second data string is generated by arranging the second data, contained in the first data string, at the location of the first data string from which the first data is extracted.

6. A data generation method according to claim 5, wherein each of the first data and the second data contains at least one of normalization coefficient information and quantization precision information of a coding process in the coding step.

7. A data generation method according to claim 1, further comprising:
a component transforming step for transforming input data into a frequency component; and
a coding step for coding the data that is the frequency component obtained in the component transforming step,
wherein in the first generating step, the first data is extracted from the first data string that is the data coded in the coding step, and the second data string is generated by arranging the second data, contained in the first string, at the location of the first data string from which the first data is extracted; and
wherein each of the first data extracted in the first generating step and the second data arranged at the location from which the first data is extracted contains spectral coefficient information of the frequency component that is obtained in the component transforming step.

8. A data generation method according to claim 1, wherein each of the first data and the second data contains variable-length coded data.

9. A data generation method according to claim 1, wherein the second generating step further comprises encrypting the third data string.

10. A data generation apparatus for generating a predetermined data string from a first data string, the data generation apparatus comprising:
first generating means for generating a second data string by extracting first data contained in the first data string and by arranging second data, contained in the first data string, at a location from which the first data is extracted; and
second generating means for generating a third data string that contains the extracted first data and is used to restore the first data string from the second data string generated in the first generating step.

11. A computer program for causing a computer to perform a process for generating a predetermined data string from a first data string, the computer program comprising program codes for performing:
a first generating step for generating a second data string by extracting first data contained in the first data string and by arranging second data, contained in the first data string, at a location from which the first data is extracted; and
a second generating step for generating a third data string that contains the extracted first data and is used to restore the first data string from the second data string generated by the first generating means.

12. A data restoring method for restoring a first data string from a predetermined data string, the data restoring method comprising:
an acquiring step for acquiring a third data string that contains information used to restore the first data string from a second data string; and
a restoring step for restoring the first data string by inserting first data, which is contained in the third data string acquired in the acquiring step and is extracted from the first data string when second data is generated, into a location within the second data string corresponding to the location from which the first data is extracted, and by modifying a location of the second data contained in the second data string.

13. A data restoring method according to claim 12, further comprising a replaying step for replaying the first data string restored in the restoring step.

14. A data restoring method according to claim 12, further comprising a recording step for recording the first data string restored in the restoring step onto a predetermined recording medium.

15. A data restoring apparatus for restoring a first data string from a predetermined data string, the data restoring apparatus comprising:
acquiring means for acquiring a third data string that contains information used to restore the first data string from a second data string; and
restoring means for restoring the first data string by inserting first data, which is contained in the third data string acquired by the acquiring means and is extracted from the first data string when second data is generated, into a location within the second data string corresponding to the location from which the first data is extracted, and by modifying a location of the second data contained in the second data string.

16. A computer program for causing a computer to perform a data restoring method for restoring a first data string from a predetermined data string, the computer program comprising program codes for performing:
an acquiring step for acquiring a third data string that contains information used to restore the first data string from a second data string; and
a restoring step for restoring the first data string by inserting first data, which is contained in the third data string acquired in the acquiring step and is extracted from the first data string when second data is generated, into a location within the second data string corresponding to the location from which the first data is extracted, and by modifying a location of the second data contained in the second data string.
